(19) Europäisches Patentamt
European Patent Office
Office européen des brevets

(11) **EP 4 506 738 A2**

(12) **EUROPEAN PATENT APPLICATION**

(43) Date of publication:
**12.02.2025 Bulletin 2025/07**

(51) International Patent Classification (IPC):
**G02B 5/00** (2006.01)    **G02B 13/00** (2006.01)
**G02B 27/00** (2006.01)    **G02B 6/12** (2006.01)

(21) Application number: **24193559.2**

(22) Date of filing: **08.08.2024**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **11.08.2023  US 202363518986 P**
**30.05.2024  TW 113120109**

(71) Applicant: **LARGAN PRECISION CO., LTD.**
**Taichung City 408 (TW)**

(72) Inventors:
• **TUNG, Wei-Che**
**408 Taichung City (TW)**
• **CHENG, Chih-Wei**
**408 Taichung City (TW)**
• **FAN, Chen-Wei**
**408 Taiching City (TW)**

(74) Representative: **Jakelski & Althoff**
**Patentanwälte PartG mbB**
**Patentanwälte**
**Partnerschaftsgesellschaft**
**Mollenbachstraße 37**
**71229 Leonberg (DE)**

(54) **IMAGING LENS ASSEMBLY, IMAGING LENS ASSEMBLY MODULE AND ELECTRONIC DEVICE**

(57)    An imaging lens assembly includes a plurality of lens elements, a light path folding element and a sheet-like light blocking element. An optical axis is defined via the lens elements. The light path folding element includes an optical surface, and a total reflection of an imaging light of the imaging lens assembly occurs at least once on the optical surface. The sheet-like light blocking element is corresponding to the light path folding element, and the sheet-like light blocking element includes a first surface, a second surface and a microstructure layer. The first surface faces towards the optical surface. The second surface is disposed relatively to the first surface. The microstructure layer is at least disposed on the first surface, and protrusions are formed on the first surface via the microstructure layer. At least partial area between the microstructure layer and the optical surface has an air slit.

Fig. 1A

## Description

### BACKGROUND

Technical Field

The present disclosure relates to an imaging lens assembly and an imaging lens assembly module. More particularly, the present disclosure relates to an imaging lens assembly and an imaging lens assembly module applicable to portable electronic devices.

Description of Related Art

In recent years, portable electronic devices have developed rapidly. For example, intelligent electronic devices and tablets have been filled in the lives of modern people, and imaging lens assembly modules and imaging lens assemblies thereof mounted on portable electronic devices have also prospered. However, as technology advances, the quality requirements of the imaging lens assembly are becoming higher and higher. Therefore, an imaging lens assembly, which can block the stray light, needs to be developed.

### SUMMARY

According to one aspect of the present disclosure, an imaging lens assembly includes a plurality of lens elements, a light path folding element and a sheet-like light blocking element. An optical axis is defined via the lens elements. The light path folding element is configured to fold the optical axis, and the light path folding element includes an optical surface, and a total reflection of an imaging light of the imaging lens assembly occurs at least once on the optical surface. The sheet-like light blocking element is corresponding to the light path folding element, and the sheet-like light blocking element includes a first surface, a second surface and a microstructure layer. The first surface faces towards the optical surface. The second surface is disposed relatively to the first surface. The microstructure layer is at least disposed on the first surface, and a plurality of protrusions are formed on the first surface via the microstructure layer. At least partial area between the microstructure layer and the optical surface has an air slit. When a surface of the microstructure layer is measured according to ISO25178 standard, a number of peaks per square millimeter of the microstructure layer is Ypd; the surface of the microstructure layer is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, an areal material ratio that divides a core surface from the reduced peak is Ymr1, and the following conditions are satisfied: $20000 \ (1/mm^2) \leq Ypd \leq 110000 \ (1/mm^2)$; and $17\% \leq Ymr1 \leq 45\%$.

According to the imaging lens assembly of the aforementioned aspect, wherein the surface of the microstructure layer is measured according to ISO25178 standard, the areal material ratio that divides the core surface from the reduced peak is Ymr1, and the following condition is satisfied: $17\% \leq Ymr1 \leq 25\%$.

According to the imaging lens assembly of the aforementioned aspect, wherein an average height of the reduced peak is Aph, and the following condition is satisfied: $2.0 \ \mu m \leq Aph \leq 40.1 \ \mu m$.

According to the imaging lens assembly of the aforementioned aspect, wherein the average height of the reduced peak is Aph, and the following condition is satisfied: $2.0 \ \mu m \leq Aph \leq 21.2 \ \mu m$.

According to the imaging lens assembly of the aforementioned aspect, wherein the average height of the reduced peak is Aph, and the following condition is satisfied: $5.4 \ \mu m \leq Aph \leq 19.2 \ \mu m$.

According to the imaging lens assembly of the aforementioned aspect, wherein the average height of the reduced peak is Aph, and the following condition is satisfied: $7.3 \ \mu m \leq Aph \leq 14.5 \ \mu m)$.

According to the imaging lens assembly of the aforementioned aspect, wherein the surface of the microstructure layer is measured according to ISO25178 standard, a number of the peaks of the microstructure layer larger than the core height and larger than 4 $\mu m$ is Hpq, and the following condition is satisfied: $2 \leq Hpq \leq 400$.

According to the imaging lens assembly of the aforementioned aspect, wherein the surface of the microstructure layer is measured according to ISO25178 standard, the number of the peaks of the microstructure layer larger than the core height and larger than 4 $\mu m$ is Hpq, and the following condition is satisfied: $40 \leq Hpq \leq 210$.

According to the imaging lens assembly of the aforementioned aspect, wherein a height of the air slit is Ha, and the following condition is satisfied: $1 \ \mu m < Ha < 102 \ \mu m$.

According to the imaging lens assembly of the aforementioned aspect, wherein the imaging lens assembly further includes an adhesive element disposed on at least one of the first surface and the second surface, and the air slit is formed on the at least partial area between the microstructure layer and the optical surface via the adhesive element.

According to the imaging lens assembly of the aforementioned aspect, wherein a thickness of the sheet-like light blocking element is TL, and the following condition is satisfied: 10 μm < TL < 170 μm.

According to the imaging lens assembly of the aforementioned aspect, wherein a thickness of the adhesive element is TA, and the following condition is satisfied: 3 μm < TA < 105 μm).

According to the imaging lens assembly of the aforementioned aspect, wherein a thickness difference of entire of the adhesive element is less than 10 μm.

According to the imaging lens assembly of the aforementioned aspect, wherein the sheet-like light blocking element further includes a nanostructure layer disposed on the surface of the microstructure layer, and the nanostructure layer includes a plurality of nanoparticles, wherein the nanoparticles are stacked, and a number of the nanoparticles gradually decreases towards a direction away from the sheet-like light blocking element.

According to one aspect of the present disclosure, an imaging lens assembly includes a plurality of lens elements, a light path folding element and a sheet-like light blocking element. An optical axis is defined via the lens elements. The light path folding element is configured to fold the optical axis, and the light path folding element includes an optical surface, and a total reflection of an imaging light of the imaging lens assembly occurs at least once on the optical surface. The sheet-like light blocking element is corresponding to the light path folding element, and the sheet-like light blocking element includes a first surface, a second surface and a microstructure layer. The first surface faces towards the optical surface. The second surface is disposed relatively to the first surface. The microstructure layer is at least disposed on the first surface, and a plurality of protrusions are formed on the first surface via the microstructure layer. At least partial area between the microstructure layer and the optical surface has an air slit. When a surface of the microstructure layer is measured according to ISO25178 standard, a number of peaks per square millimeter of the microstructure layer is Ypd, and the following condition is satisfied: 20000 (1/mm$^2$) ≤ Ypd ≤ 110000 (1/mm$^2$). When the surface of the microstructure layer is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, an average height of the reduced peak is Aph; the surface of the microstructure layer is measured according to ISO25178 standard, a number of the peaks of the microstructure layer larger than the core height and larger than 4 μm is Hpq, and at least one of the following conditions is satisfied: 2.0 μm ≤ Aph ≤ 40.1 μm; 2 ≤ Hpq ≤ 400.

According to the imaging lens assembly of the aforementioned aspect, wherein the average height of the reduced peak is Aph, and the following condition is satisfied: 2.0 μm ≤ Aph ≤ 21.2 μm.

According to the imaging lens assembly of the aforementioned aspect, wherein the surface of the microstructure layer is measured according to ISO25178 standard, the number of the peaks of the microstructure layer larger than the core height and larger than 4 μm is Hpq; the average height of the reduced peak is Aph, and at least one of the following conditions is satisfied: 2 ≤ Hpq ≤ 400; 5.4 μm ≤ Aph ≤ 19.2 μm.

According to the imaging lens assembly of the aforementioned aspect, wherein the average height of the reduced peak is Aph; the number of the peaks of the microstructure layer larger than the core height and larger than 4 μm is Hpq, and at least one of the following conditions is satisfied: 5.4 μm ≤ Aph ≤ 19.2 μm; 40 ≤ Hpq ≤ 210.

According to the imaging lens assembly of the aforementioned aspect, wherein the surface of the microstructure layer is measured according to ISO25178 standard, an areal material ratio that divides a core surface from the reduced peak is Ymr1, and the following condition is satisfied: 17% ≤ Ymr1 ≤ 30%; wherein the number of the peaks of the microstructure layer larger than the core height and larger than 4 μm is Hpq; the average height of the reduced peak is Aph, and at least one of the following conditions is satisfied: 40 ≤ Hpq ≤ 210; 7.3 μm ≤ Aph ≤ 14.5 μm.

According to the imaging lens assembly of the aforementioned aspect, wherein the areal material ratio that divides the core surface from the reduced peak is Ymr1; the average height of the reduced peak is Aph; the number of the peaks of the microstructure layer larger than the core height and larger than 4 μm is Hpq, and the following conditions are simultaneously satisfied: 17% ≤ Ymr1 ≤ 25%; 7.3 μm ≤ Aph ≤ 14.5 μm; and 40 ≤ Hpq ≤ 210.

According to the imaging lens assembly of the aforementioned aspect, wherein a height of the air slit is Ha, and the following condition is satisfied: 1 μm < Ha < 102 μm.

According to the imaging lens assembly of the aforementioned aspect, wherein imaging lens assembly further includes an adhesive element disposed on at least one of the first surface and the second surface, and the air slit is formed on the at least partial area between the microstructure layer and the optical surface via the adhesive element.

According to the imaging lens assembly of the aforementioned aspect, wherein a thickness of the sheet-like light blocking element is TL, and the following condition is satisfied: 10 μm < TL < 170 μm.

According to the imaging lens assembly of the aforementioned aspect, wherein a thickness of the adhesive element is TA, and the following condition is satisfied: 3 μm < TA < 105 μm.

According to the imaging lens assembly of the aforementioned aspect, wherein a thickness difference of entire of the adhesive element is less than 10 μm.

According to the imaging lens assembly of the aforementioned aspect, wherein the sheet-like light blocking element further includes a nanostructure layer disposed on the surface of the microstructure layer, and the nanostructure layer includes a plurality of nanoparticles, wherein the nanoparticles are stacked, and a number of the nanoparticles gradually decreases towards a direction away from the sheet-like light blocking element.

According to one aspect of the present disclosure, an imaging lens assembly includes an optical element and a sheet-like light blocking element. The sheet-like light blocking element is corresponding to the optical element, and the sheet-like light blocking element includes a first surface, a second surface and a microstructure layer. The first surface faces towards the optical element. The second surface is disposed relatively to the first surface. The microstructure layer is at least disposed on the first surface, and a plurality of protrusions are formed on the first surface via the microstructure layer. At least partial area between the microstructure layer and the optical element has an air slit. When a surface of the microstructure layer is measured according to ISO25178 standard, a number of peaks per square millimeter of the microstructure layer is Ypd; the surface of the microstructure layer is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, an areal material ratio that divides a core surface from the reduced peak is Ymr1, and the following conditions are satisfied: $20000$ $(1/\text{mm}^2) \leq \text{Ypd} \leq 110000$ $(1/\text{mm}^2)$; and $17\% \leq \text{Ymr1} \leq 45\%$.

According to the imaging lens assembly of the aforementioned aspect, wherein the surface of the microstructure layer is measured according to ISO25178 standard, the areal material ratio that divides the core surface from the reduced peak is Ymr1, and the following condition is satisfied: $17\% \leq \text{Ymr1} \leq 25\%$.

According to the imaging lens assembly of the aforementioned aspect, wherein an average height of the reduced peak is Aph, and the following condition is satisfied: $2.0$ $\mu\text{m} \leq \text{Aph} \leq 21.2$ $\mu\text{m}$.

According to the imaging lens assembly of the aforementioned aspect, wherein the average height of the reduced peak is Aph, and the following condition is satisfied: $5.4$ $\mu\text{m} \leq \text{Aph} \leq 19.2$ $\mu\text{m}$.

According to the imaging lens assembly of the aforementioned aspect, wherein the average height of the reduced peak is Aph, and the following condition is satisfied: $7.3$ $\mu\text{m} \leq \text{Aph} \leq 14.5$ $\mu\text{m}$.

According to the imaging lens assembly of the aforementioned aspect, wherein the surface of the microstructure layer is measured according to ISO25178 standard, a number of the peaks of the microstructure layer larger than the core height and larger than 4 $\mu\text{m}$ is Hpq, and the following condition is satisfied: $2 \leq \text{Hpq} \leq 400$.

According to the imaging lens assembly of the aforementioned aspect, wherein the surface of the microstructure layer is measured according to ISO25178 standard, the number of the peaks of the microstructure layer larger than the core height and larger than 4 $\mu\text{m}$ is Hpq, and the following condition is satisfied: $40 \leq \text{Hpq} \leq 210$.

According to the imaging lens assembly of the aforementioned aspect, wherein a height of the air slit is Ha, and the following condition is satisfied: $1$ $\mu\text{m} < \text{Ha} < 102$ $\mu\text{m}$.

According to the imaging lens assembly of the aforementioned aspect, wherein the imaging lens assembly further includes an adhesive element disposed on at least one of the first surface and the second surface, and the air slit is formed on the at least partial area between the microstructure layer and the optical element via the adhesive element.

According to the imaging lens assembly of the aforementioned aspect, wherein a thickness of the sheet-like light blocking element is TL, and the following condition is satisfied: $10$ $\mu\text{m} < \text{TL} < 170$ $\mu\text{m}$.

According to the imaging lens assembly of the aforementioned aspect, wherein a thickness of the adhesive element is TA, and the following condition is satisfied: $3$ $\mu\text{m} < \text{TA} < 105$ $\mu\text{m}$.

According to the imaging lens assembly of the aforementioned aspect, wherein a thickness difference of entire of the adhesive element is less than 10 $\mu\text{m}$.

According to the imaging lens assembly of the aforementioned aspect, wherein the first surface includes a plane portion smoother than another area of the first surface, and the plane portion is physically contacted with the optical element.

According to the imaging lens assembly of the aforementioned aspect, wherein the sheet-like light blocking element further includes a nanostructure layer disposed on the surface of the microstructure layer, and the nanostructure layer includes a plurality of nanoparticles, wherein the nanoparticles are stacked, and a number of the nanoparticles gradually decreases towards a direction away from the sheet-like light blocking element.

According to one aspect of the present disclosure, an imaging lens assembly includes an optical element and a sheet-like light blocking element. The sheet-like light blocking element is corresponding to the optical element, and the sheet-like light blocking element includes a first surface, a second surface and a microstructure layer. The first surface faces towards the optical element. The second surface is disposed relatively to the first surface. The microstructure layer is at least disposed on the first surface, and a plurality of protrusions are formed on the first surface via the microstructure layer. At least partial area between the microstructure layer and the optical element has an air slit. When a surface of the microstructure layer is measured according to ISO25178 standard, a number of peaks per square millimeter of the microstructure layer is Ypd, and the following condition is satisfied: $20000$ $(1/\text{mm}^2) \leq \text{Ypd} \leq 110000$ $(1/\text{mm}^2)$. When the surface of the microstructure layer is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, an average height of the reduced peak is Aph; the surface of the microstructure layer is measured according to ISO25178 standard, a number of the peaks of the microstructure layer larger than the core height and larger than 4 µm is Hpq, and at least one of the following conditions is satisfied: 2.0 µm ≤ Aph ≤ 40.1 µm; 2 ≤ Hpq ≤ 400.

According to the imaging lens assembly of the aforementioned aspect, wherein the average height of the reduced peak is Aph, and the following condition is satisfied: 2.0 µm ≤ Aph ≤ 21.2 µm.

According to the imaging lens assembly of the aforementioned aspect, wherein the surface of the microstructure layer is measured according to ISO25178 standard, the number of the peaks of the microstructure layer larger than the core height and larger than 4 µm is Hpq; the average height of the reduced peak is Aph, and at least one of the following conditions is satisfied: 2 ≤ Hpq ≤ 400; 5.4 µm ≤ Aph ≤ 19.2 µm.

According to the imaging lens assembly of the aforementioned aspect, wherein the average height of the reduced peak is Aph; the number of the peaks of the microstructure layer larger than the core height and larger than 4 µm is Hpq, and at least one of the following conditions is satisfied: 5.4 µm ≤ Aph ≤ 19.2 µm; 40 ≤ Hpq ≤ 210.

According to the imaging lens assembly of the aforementioned aspect, wherein the surface of the microstructure layer is measured according to ISO25178 standard, an areal material ratio that divides a core surface from the reduced peak is Ymr1, and the following condition is satisfied: 17% ≤ Ymr1 ≤ 30%; wherein the number of the peaks of the microstructure layer larger than the core height and larger than 4 µm is Hpq; the average height of the reduced peak is Aph, and at least one of the following conditions is satisfied: 40 ≤ Hpq ≤ 210; 7.3 µm ≤ Aph ≤ 14.5 µm.

According to the imaging lens assembly of the aforementioned aspect, wherein the areal material ratio that divides the core surface from the reduced peak is Ymr1; the average height of the reduced peak is Aph; the number of the peaks of the microstructure layer larger than the core height and larger than 4 µm is Hpq, and the following conditions are simultaneously satisfied: 17% ≤ Ymr1 ≤ 25%; 7.3 µm ≤ Aph ≤ 14.5 µm; and 40 ≤ Hpq ≤ 210.

According to the imaging lens assembly of the aforementioned aspect, wherein a height of the air slit is Ha, and the following condition is satisfied: 1 µm < Ha < 102 µm.

According to the imaging lens assembly of the aforementioned aspect, wherein the imaging lens assembly further includes an adhesive element disposed on at least one of the first surface and the second surface, and the air slit is formed on the at least partial area between the microstructure layer and the optical element via the adhesive element.

According to the imaging lens assembly of the aforementioned aspect, wherein a thickness of the sheet-like light blocking element is TL, and the following condition is satisfied: 10 µm < TL < 170 µm.

According to the imaging lens assembly of the aforementioned aspect, wherein a thickness of the adhesive element is TA, and the following condition is satisfied: 3 µm < TA < 105 µm.

According to the imaging lens assembly of the aforementioned aspect, wherein a thickness difference of entire of the adhesive element is less than 10 µm.

According to the imaging lens assembly of the aforementioned aspect, wherein the first surface includes a plane portion smoother than another area of the first surface, and the plane portion is physically contacted with the optical element.

According to the imaging lens assembly of the aforementioned aspect, wherein the sheet-like light blocking element further includes a nanostructure layer disposed on the surface of the microstructure layer, and the nanostructure layer includes a plurality of nanoparticles, wherein the nanoparticles are stacked, and a number of the nanoparticles gradually decreases towards a direction away from the sheet-like light blocking element.

According to one aspect of the present disclosure, an imaging lens assembly module includes the imaging lens assembly of any one of the aforementioned aspects and an image sensor, wherein the image sensor is disposed on an image surface of the imaging lens assembly module, and the image sensor is configured to receive the imaging light of the imaging lens assembly.

According to one aspect of the present disclosure, an electronic device includes the imaging lens assembly module of the aforementioned aspect.

## BRIEF DESCRIPTION OF THE DRAWINGS

Fig. 1A is a schematic view of an imaging lens assembly module according to the 1st example of the present disclosure.

Fig. 1B is an exploded view of the imaging lens assembly according to the 1st example in Fig. 1A.

Fig. 1C is a schematic view of the light path folding element and the sheet-like light blocking element according to the 1st example in Fig. 1A.

Fig. 1D is a schematic view of the sheet-like light blocking element according to the 1st example in Fig. 1A.

Fig. 1E is a schematic view of the light path folding element according to the 1st example in Fig. 1A.

Fig. 1F is a cross-sectional view of the sheet-like light blocking element according to the 1st example in Fig. 1E.

Fig. 1G is a cross-sectional view of the nanostructure layer according to the 1st example in Fig. 1F.

Fig. 2A is a schematic view of an imaging lens assembly module according to the 2nd example of the present disclosure.

Fig. 2B is a partial enlarged view of the imaging lens assembly module according to the 2nd example in Fig. 2A.

Fig. 2C is a cross-sectional view of the sheet-like light blocking element according to the 2nd example in Fig. 2B.

Fig. 2D is an assembling schematic view of a retainer and the sheet-like light blocking element according to the 2nd example in Fig. 2A.

Fig. 2E is a schematic view of the retainer and the sheet-like light blocking element according to the 2nd example in Fig. 2A.

Fig. 3A is a schematic view of an imaging lens assembly module according to the 3rd example of the present disclosure.

Fig. 3B is a partial enlarged view of the imaging lens assembly module according to the 3rd example in Fig. 3A.

Fig. 3C is a cross-sectional view of the sheet-like light blocking element according to the 3rd example in Fig. 3B.

Fig. 3D is a partial cross-sectional view of the imaging lens assembly according to the 3rd example in Fig. 3A.

Fig. 3E is a partial exploded view of the imaging lens assembly according to the 3rd example in Fig. 3A.

Fig. 4A is a schematic view of an imaging lens assembly module according to the 4th example of the present disclosure.

Fig. 4B is a partial enlarged view of the imaging lens assembly module according to the 4th example in Fig. 4A.

Fig. 4C is another partial enlarged view of the imaging lens assembly module according to the 4th example in Fig. 4A.

Fig. 4D is another partial enlarged view of the imaging lens assembly module according to the 4th example in Fig. 4A.

Fig. 4E is a schematic view of the sheet-like light blocking element according to the 4th example in Fig. 4C.

Fig. 5A is a schematic view of an electronic device according to the 5th example of the present disclosure.

Fig. 5B is another schematic view of the electronic device according to the 5th example in Fig. 5A.

Fig. 5C is a schematic view of an image captured via the electronic device according to the 5th example in Fig. 5B.

Fig. 5D is another schematic view of an image captured via the electronic device according to the 5th example in Fig. 5B.

Fig. 5E is another schematic view of an image captured via the electronic device according to the 5th example in Fig. 5B.

Fig. 6 is a schematic view of an electronic device according to the 6th example of the present disclosure.

Fig. 7A is a schematic view of a vehicle instrument according to the 7th example of the present disclosure.

Fig. 7B is another schematic view of the vehicle instrument according to the 7th example in Fig. 7A.

Fig. 7C is another schematic view of the vehicle instrument according to the 7th example in Fig. 7A.

**DETAILED DESCRIPTION**

The present disclosure provides an imaging lens assembly, which includes a sheet-like light blocking element, wherein the sheet-like light blocking element includes a first surface, a second surface and a microstructure layer, the second surface is disposed relatively to the first surface, the microstructure layer is at least disposed on the first surface, and a plurality of protrusions are formed on the first surface via the microstructure layer. When a surface of the microstructure layer is measured according to ISO25178 standard, and a number of peaks per square millimeter of the microstructure layer is Ypd, the following condition is satisfied: 20000 $(1/mm^2) \leq$ Ypd $\leq$ 110000 $(1/mm^2)$.

Therefore, the protrusions can be formed on the first surface by mixing the microparticles in the microstructure layer, and the surface characteristics can be adjusted by the microparticles with multiple particle sizes. Moreover, the protrusions can be spherical and conical, the microparticles can be made of silicon oxide, titanium oxide, carbon black or acrylic resin, and the protrusions can be regularly disposed or irregularly disposed, but the present disclosure is not limited thereto.

Further, the calculation method of each value of Ypd can be corresponding to the density of peaks (Spd) according to ISO25178 standard, Spd can be represented the number of the peaks per square millimeter of the microstructure layer, Spd can be also represented to the roughness of the convex particles, and the number and the roughness of the convex particles can be maintained in the appropriate range when the aforementioned condition is satisfied. Further, the condition can be satisfied: 20000 $(1/mm^2) \leq$ Ypd $\leq$ 80000 $(1/mm^2)$.

The imaging lens assembly can further include a plurality of lens elements and a light path folding element, wherein an optical axis is defined via the lens elements, the light path folding element is configured to fold the optical axis, the light path folding element includes an optical surface, and a total reflection of an imaging light of the imaging lens assembly occurs at least once on the optical surface. Furthermore, the sheet-like light blocking element is corresponding to the light path folding element, the first surface faces towards the optical surface, and at least partial area between the microstructure layer and the optical surface has an air slit. The stray light easily passes through the light path folding element owing to the optical surface, and hence the stray light can be blocked to avoid reflecting back to the light path folding element by the cooperation between the air slit and the specific surface characteristic. Further, the light path folding element can be made of glass or plastic, but the present disclosure is not limited thereto.

Or, the imaging lens assembly can further include an optical element, wherein the sheet-like light blocking element is corresponding to the optical element, the first surface faces towards the optical element, and at least partial area between the microstructure layer and the optical element has the air slit. In particular, the optical element can be an element applied to the imaging lens assembly such as a glass lens element, a plastic lens element, a glass light path folding element, a plastic light path folding element, a retainer, a spacer, a lens barrel, and the present disclosure is not limited thereto.

When the surface of the microstructure layer is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, and an areal material ratio that divides a core surface from the reduced peak is Ymr1, the condition can be satisfied: 17% $\leq$ Ymr1 $\leq$ 45%. In particular, the calculation method of each value of Ymr1 can be corresponding to the areal material ratio (Smr1) that divides a core surface from the reduced peak according to ISO25178 standard, and Smr1 can be represented the percentage of the area occupied by the relatively higher peak relatively to the total analyzed area, wherein the areal material ratio curve is also called Abbott-Firestone Curve or Bearing Area Curve. Further, the following condition can be satisfied: 17% $\leq$ Ymr1 $\leq$ 30%. Further, the following condition can be satisfied: 17% $\leq$ Ymr1 $\leq$ 25%.

When the surface of the microstructure layer is measured according to ISO25178 standard, the equivalent line and the areal material ratio curve are obtained, the core height is defined by 0% to 100% of the equivalent line corresponding to the areal material ratio curve, the reduced peak is the portion of the areal material ratio curve higher than the core height, an average height of the reduced peak is Aph; the surface of the microstructure layer is measured according to ISO25178 standard, and a number of the peaks of the microstructure layer larger than the core height and larger than 4 $\mu$m is Hpq, at least one of the following conditions is satisfied: 2.0 $\mu$m $\leq$ Aph $\leq$ 40.1 $\mu$m; 2 $\leq$ Hpq $\leq$ 400. Further, at least one of the following conditions is satisfied: 2.0 $\mu$m $\leq$ Aph $\leq$ 21.2 $\mu$m; 5 $\leq$ Hpq $\leq$ 300. Further, at least one of the following conditions is satisfied: 2 $\leq$ Hpq $\leq$ 400; 5.4 $\mu$m $\leq$ Aph $\leq$ 19.2 $\mu$m. Further, at least one of the following conditions is satisfied: 5.4 $\mu$m $\leq$ Aph $\leq$ 19.2 $\mu$m; 40 $\leq$ Hpq $\leq$ 210. Further, at least one of the following conditions is satisfied: 40 $\leq$ Hpq $\leq$ 210; 7.3 $\mu$m $\leq$ Aph $\leq$ 14.5 $\mu$m.

Moreover, the calculation method of each value of Aph can be corresponding to the reduced peak height (Spk) according to ISO25178 standard, Spk can be represented the height difference between the relatively highest one of the convex particles on the microstructure layer and other particles. When the value of Aph is higher, the microstructure layer has the partial convex particles with the higher degree of convexity on the microstructure layer, and hence the blocking efficiency of the stray light can be enhanced. Furthermore, the calculation method of each value of Hpq can be obtained by setting the measurement threshold of the instrument (larger than the core height and larger than 4 $\mu$m), and the measurement value is formed via the calculation of the instrument. However, in some cases such as the interpretation error of the instrument is caused when the dimension of the microstructure layer is excessively large, and hence the number of the peaks can be directly calculated via the picture. Hpq can be represented the number of the peaks with the relatively higher degree of protrusions on the microstructure layer. When Hpq is maintained in the proper number, the light trap structure can be formed so as to diminish the stray light in the light trap structure.

In detail, the multiple surface parameters of the microstructure layer are required to comprehensively consider. For example, when one of the conditions is not satisfied, the other conditions are still configured to compensate the ability to eliminate the stray light; when the more conditions are satisfied, the performance of eliminating the stray light can be enhanced. According to the experimental speculation, the ability to eliminate the stray light is influenced via the number of the peaks of the microstructure layer, the height of the protrusions and the density of the protrusions. When the conditions are maintained in the specific range, the stray light can be diminished in the air slit.

The imaging lens assembly can further include an adhesive element disposed on at least one of the first surface and the second surface, and the air slit is formed on the at least partial area between the microstructure layer and the optical surface or the at least partial area between the microstructure layer and the optical element via the adhesive element. Therefore, the disposition location of the sheet-like light blocking element is not limited to the mechanical design of the adjacent optical element via the adhesive element, so that the design freedom of the imaging lens assembly can be enhanced. In particular, the adhesive element is configured to fix the sheet-like light blocking element on other optical element.

The sheet-like light blocking element can further include a nanostructure layer disposed on the surface of the microstructure layer, and the nanostructure layer includes a plurality of nanoparticles. Moreover, the nanoparticles are stacked, and a number of the nanoparticles gradually decreases towards a direction away from the sheet-like light blocking element. Therefore, the microstructure layer with the larger dimension can be obtained while maintaining the low reflectivity. In particular, the gradual decrease of the number of the nanoparticles is favorable for forming the graded index so as to lower the reflectivity, and the plane is more easily formed on the peak of the microstructure layer via the aforementioned surface characteristics for enhancing the reflectivity.

The first surface can include a plane portion smoother than another area of the first surface, and the plane portion is physically contacted with the optical element. Therefore, the assembling accuracy can be enhanced. In particular, the plane portion can be formed by controlling the disposition range of the microstructure layer, and the smoother area can be also formed by pressing the partial area of the microstructure layer tightly via the stamping process.

The microstructure layer can further include a fixing layer, wherein the fixing layer covers the microparticles to fix the microparticles on the first surface so as to form the protrusions on the first surface.

When an average height of the reduced peak is Aph, the following condition can be satisfied: $2.0~\mu m \leq Aph \leq 40.1~\mu m$. Further, the following condition can be satisfied: $2.0~\mu m \leq Aph \leq 21.2~\mu m$. Further, the following condition can be satisfied: $5.4~\mu m \leq Aph \leq 19.2~\mu m$. Further, the following condition can be satisfied: $7.3~\mu m \leq Aph \leq 14.5~\mu m$.

When the surface of the microstructure layer is measured according to ISO25178 standard, and a number of the peaks of the microstructure layer larger than the core height and larger than 4 $\mu$m is Hpq, the following condition can be satisfied: $2 \leq Hpq \leq 400$. Further, the following condition can be satisfied: $5 \leq Hpq \leq 300$. Further, the following condition can be satisfied: $40 \leq Hpq \leq 210$.

Or, when the areal material ratio that divides a core surface from the reduced peak is Ymr1; the average height of the reduced peak is Aph; the number of the peaks of the microstructure layer larger than the core height and larger than 4 $\mu$m is Hpq, the following conditions can be simultaneously satisfied: $17\% \leq Ymr1 \leq 25\%$; $7.3~\mu m \leq Aph \leq 14.5~\mu m$; and $40 \leq Hpq \leq 210$.

When a height of the air slit is Ha, the following condition can be satisfied: $1~\mu m < Ha < 102~\mu m$. Therefore, the air slit can be configured to avoid the microstructure layer contact with the optical surface so as to decrease the damage of the microstructure layer, and the stray light can be interacted with the microstructure layer in the air slit so as to diminish the stray light in the air slit. Further, the air slit can be formed by assembling the adhesive element or the mechanism, and the height of the air slit can be the variable value, wherein the height of the air slit can be influenced based on the relief of the microstructure layer and the location variation of the sheet-like light blocking element.

When a thickness of the sheet-like light blocking element is TL, the following condition can be satisfied: $10~\mu m < TL < 170~\mu m$. Therefore, the sheet-like light blocking element with thicker thickness is favorable for avoiding the light blocking position owing to the bend of the sheet-like light blocking element.

When a thickness of the adhesive element is TA, the following condition can be satisfied: $3~\mu m < TA < 105~\mu m$. Therefore, the air slit can be formed, and the better adhesion can be provided via the proper thickness.

A thickness difference of entire of the adhesive element can be less than 10 $\mu$m. Therefore, the height of the air slit can be stably maintained.

In particular, the parameters of the present disclosure are measured via VK-X3100, wherein the measurement comprehensive magnification of the parameter Ypd is 480 times, the object lens is 20 times, the measurement resolution is 1024×768, the analysis area is 500 $\mu$m×500 $\mu$m, and the measurement spacing distance is 0.5 $\mu$m; the measurement comprehensive magnification of the parameter Ymr1 is 480 times, the object lens is 20 times, the measurement resolution is 1024×768, the analysis area is 500 $\mu$m×500 $\mu$m, and the measurement spacing distance is 0.5 $\mu$m; the measurement comprehensive magnification of the parameter Aph is 2400 times, the object lens is 100 times, the measurement resolution is 1024×768, the analysis area is 100 $\mu$m×100 $\mu$m, and the measurement spacing distance is 0.2 $\mu$m; the measurement comprehensive magnification of the parameter Hpq is 2400 times, the object lens is 100 times, the measurement resolution is 1024×768, the analysis area is 100 $\mu$m×100 $\mu$m, and the measurement spacing distance is 0.2 $\mu$m. Moreover, each parameter is required to measure the values of at least five different areas of the microstructure layer, and the calculation of the average thereof is the judgment basis of the condition.

Each of the aforementioned features of the imaging lens assembly can be utilized in various combinations for achieving the corresponding effects.

The present disclosure provides an imaging lens assembly module, which includes the aforementioned imaging lens assembly and an image sensor, wherein the image sensor is disposed on an image surface of the imaging lens assembly module, and the image sensor is configured to receive the imaging light of the imaging lens assembly.

The present disclosure provides an electronic device, which includes the aforementioned imaging lens assembly module.

According to the aforementioned embodiment, specific examples are provided, and illustrated via figures.

<1st example>

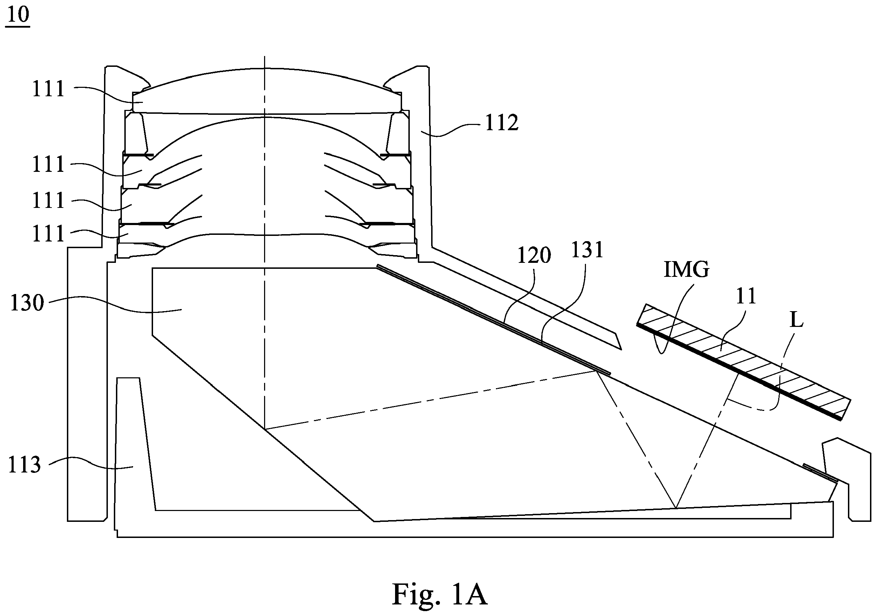

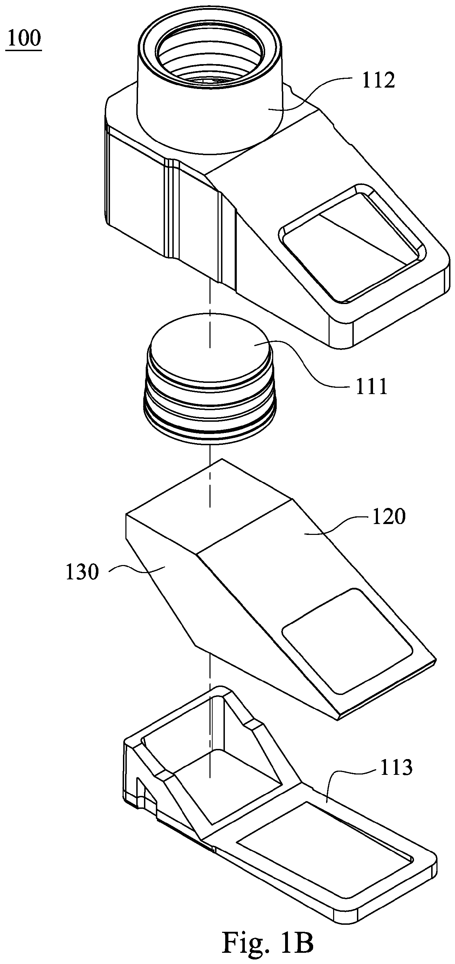

Fig. 1A is a schematic view of an imaging lens assembly module 10 according to the 1st example of the present disclosure. In Fig. 1A, the imaging lens assembly module 10 includes an imaging lens assembly 100 (labelled in Fig. 1B) and an image sensor 11, wherein the image sensor 11 is disposed on an image surface IMG of the imaging lens assembly module 10, and the image sensor 11 is configured to receive an imaging light L of the imaging lens assembly 100.

Fig. 1B is an exploded view of the imaging lens assembly 100 according to the 1st example in Fig. 1A. In Figs. 1A and 1B, the imaging lens assembly 100 includes a plurality of lens elements 111, a sheet-like light blocking element 120 and a light path folding element 130, wherein an optical axis (its reference numeral is omitted) is defined via the lens elements 111, the sheet-like light blocking element 120 is corresponding to the light path folding element 130, and the light path folding element 130 is configured to fold the optical axis. In particular, the light path is folded via the light path folding element 130, so that the volume of the imaging lens assembly 100 can be reduced. Moreover, the imaging lens assembly 100 is the telephoto imaging lens assembly, and the light path folding element 130 can be made of glass or plastic, but the present disclosure is not limited thereto.

In Figs. 1A and 1B, the imaging lens assembly 100 can further include a lens barrel 112 and an assembling element 113, wherein the lens barrel 112 is configured to accommodate the lens elements 111 and the light path folding element 130, and the assembling element 113 is configured to fix the light path folding element 130.

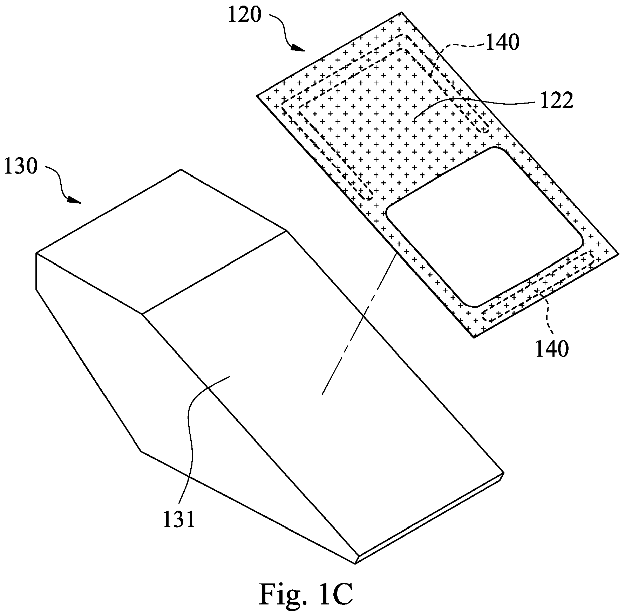

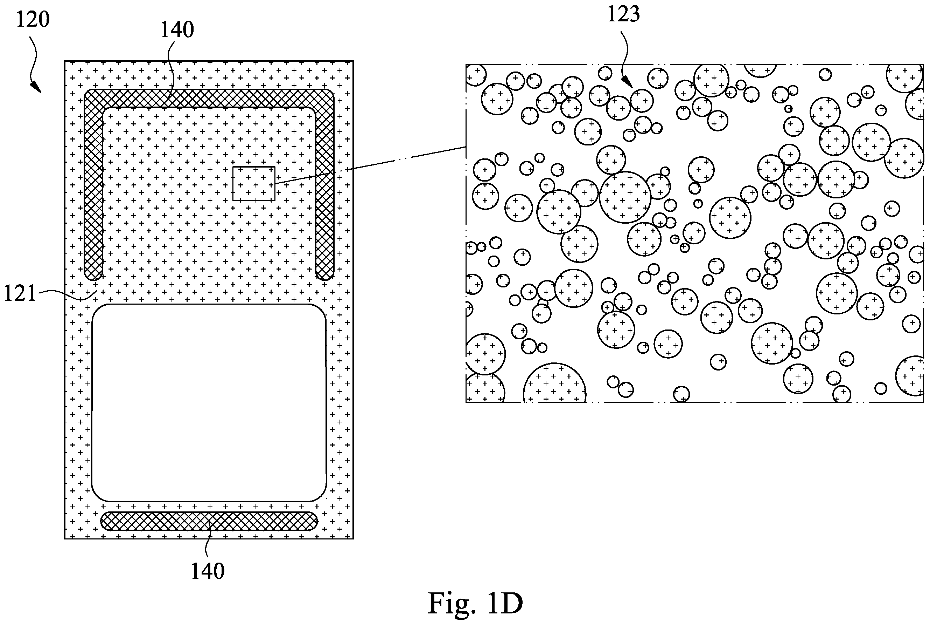

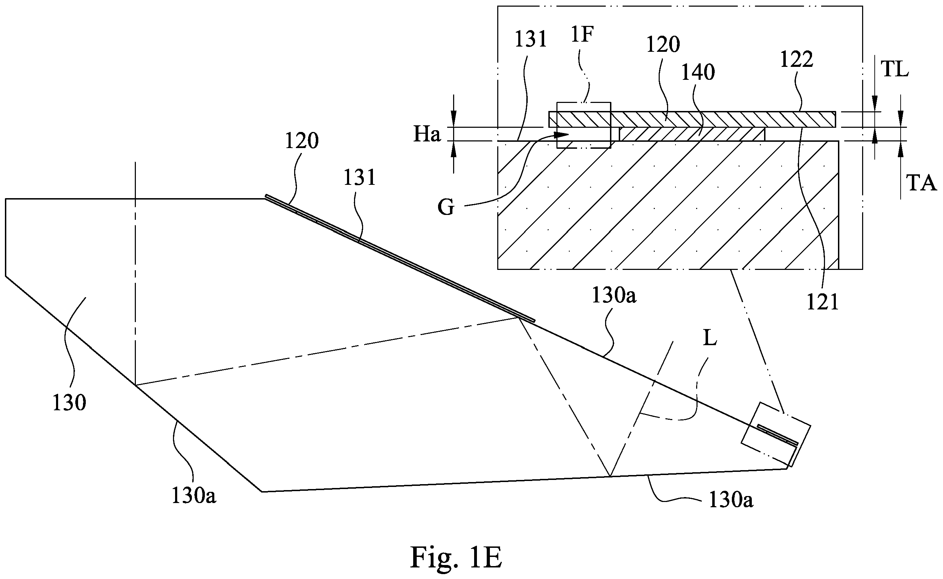

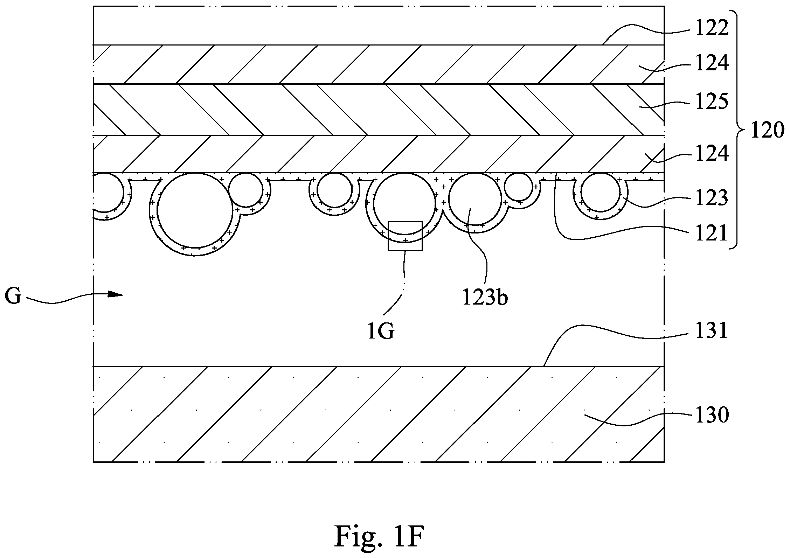

Fig. 1C is a schematic view of the light path folding element 130 and the sheet-like light blocking element 120 according to the 1st example in Fig. 1A. Fig. 1D is a schematic view of the sheet-like light blocking element 120 according to the 1st example in Fig. 1A. Fig. 1E is a schematic view of the light path folding element 130 according to the 1st example in Fig. 1A. Fig. 1F is a cross-sectional view of the sheet-like light blocking element 120 according to the 1st example in Fig. 1E. In Figs. 1A, 1C, 1D, 1E and 1F, the light path folding element 130 includes an optical surface 131, wherein a total reflection of the imaging light L of the imaging lens assembly 100 occurs at least once on the optical surface 131. The sheet-like light blocking element 120 includes a first surface 121, a second surface 122 and a microstructure layer 123, wherein the first surface 121 faces towards the optical surface 131, the second surface 122 is disposed relatively to the first surface 121, the microstructure layer 123 is disposed on the first surface 121, a plurality of protrusions are formed on the first surface 121 via the microstructure layer 123, and at least partial area between the microstructure layer 123 and the optical surface 131 has an air slit G.

In detail, the stray light easily passes through the light path folding element 130 owing to the optical surface 131, and hence the stray light can be blocked to avoid reflecting back to the light path folding element 130 by the cooperation between the air slit G and the specific surface characteristic. Further, the air slit G can be configured to avoid the microstructure layer 123 contact with the optical surface 131 so as to decrease the damage of the microstructure layer 123, and the stray light can be interacted with the microstructure layer 123 in the air slit G so as to diminish the stray light in the air slit G.

In Figs. 1C to 1E, the imaging lens assembly 100 can further include an adhesive element 140 disposed on the first surface 121, and the air slit G is formed on the at least partial area between the microstructure layer 123 and the optical surface 131 via the adhesive element 140. Therefore, the disposition location of the sheet-like light blocking element 120 is not limited to the mechanical design of the adjacent optical element (that is, the light path folding element 130) via the adhesive element 140, so that the design freedom of the imaging lens assembly 100 can be enhanced. In particular, the adhesive element 140 is configured to fix the sheet-like light blocking element 120 on the light path folding element 130, and the air slit G can be formed via the adhesive element 140.

In Fig. 1E, the light path folding element 130 has three reflecting surfaces 130a, wherein two of the reflecting surfaces 130a are configured to reflect the light via the coating, and the other one of the reflecting surfaces 130a is configured to reflect the light by the principle of the optical total reflection.

In Fig. 1F, the sheet-like light blocking element 120 can further include two coating layers 124 and a core material 125, wherein the core material 125 is disposed between the coating layers 124, and the coating layers 124 are connected to the first surface 121 and the second surface 122, respectively.

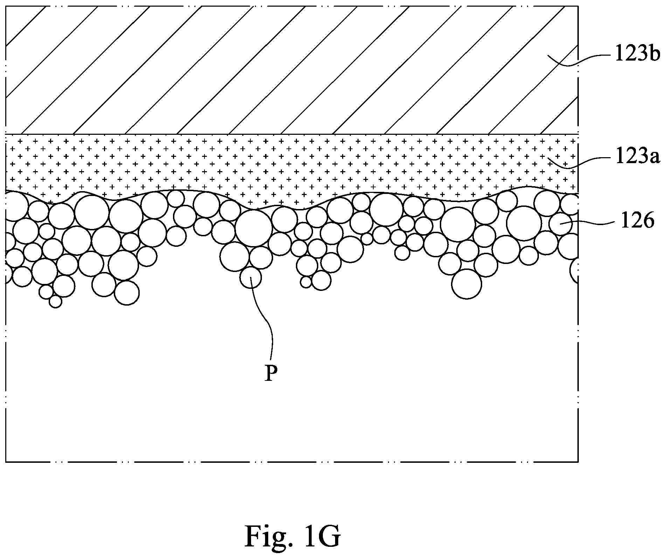

Fig. 1G is a cross-sectional view of the nanostructure layer 126 according to the 1st example in Fig. 1F. In Figs. 1F and 1G, the sheet-like light blocking element 120 can further include a nanostructure layer 126 disposed on the surface of the microstructure layer 123, and the nanostructure layer 126 includes a plurality of nanoparticles P, wherein the nanoparticles P are stacked, and a number of the nanoparticles P gradually decreases towards a direction away from the sheet-like light blocking element 120. Therefore, the microstructure layer 123 with the larger dimension can be obtained while maintaining the low reflectivity. In particular, the gradual decrease of the number of the nanoparticles P is favorable for forming the graded index so as to lower the reflectivity.

In Fig. 1G, the microstructure layer 123 can further include a fixing layer 123a, wherein the protrusions of the microstructure layer 123 can formed via the microparticles 123b, the surface of each of the microparticles 123b is coated via the fixing layer 123a, and the fixing layer 123a covers the microparticles 123b to fix the microparticles 123b on the first surface 121. Moreover, the protrusions can be formed on the first surface 121 by mixing the microparticles 123b in the microstructure layer 123, and the surface characteristics can be adjusted by the microparticles 123b with multiple particle sizes, wherein the protrusions can be spherical and conical, the microparticles 123b can be made of silicon oxide, titanium oxide, carbon black or acrylic resin, and the protrusions can be regularly disposed or irregularly disposed, but the present disclosure is not limited thereto.

In Fig. 1E, when a height of the air slit G is Ha, a thickness of the sheet-like light blocking element 120 is TL, and a thickness of the adhesive element 140 is TA, the following conditions of Table 1 are satisfied. Further, an thickness difference of entire of the adhesive element 140 can be less than 10 $\mu$m.

| Table 1, the 1st example | | | |
|---|---|---|---|
| Ha ($\mu$m) | 23 | TA ($\mu$m) | 25 |
| TL ($\mu$m) | 85 | | |

Moreover, when a surface of the microstructure layer 123 is measured according to ISO25178 standard, and a number of peaks per square millimeter of the microstructure layer 123 is Ypd; the surface of the microstructure layer 123 is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, and an areal material ratio that divides a core surface from the reduced peak is Ymr1; an average height of the reduced peak is Aph; the surface of the microstructure layer 123 is measured according to ISO25178 standard, and a number of the peaks of the microstructure layer 123 larger than the core height and larger than 4 $\mu$m is Hpq, the following conditions of Table 2 are satisfied. It should be mentioned that the samples 1 to 24 are corresponding to the values of 24 types of the microstructure layers, and all of the samples 1 to 24 can be applied to the 1st example.

| Table 2 | | | | |
|---|---|---|---|---|
| parameter | Ypd (1/mm$^2$) | Ymr1 (%) | Aph ($\mu$m) | Hpq |
| magnification | 480 times | 480 times | 2400 times | 2400 times |
| analysis area | 500 $\mu$m $\times$ 500 $\mu$m | 500 $\mu$m $\times$ 500 $\mu$m | 100 $\mu$m $\times$ 100 $\mu$m | 100 $\mu$m $\times$ 100 $\mu$m |
| measurement dimension | 1024$\times$768 | 1024$\times$768 | 1024$\times$768 | 1024$\times$768 |
| measurement spacing distance | 0.5 $\mu$m | 0.5 $\mu$m | 0.2 $\mu$m | 0.2 $\mu$m |
| sample 1 | 81449 | 10.52 | 2.12 | 3 |
| sample 2 | 105688 | 15.87 | 6.65 | 32 |
| sample 3 | 66182 | 16.80 | 5.02 | 34 |
| sample 4 | 29425 | 15.00 | 7.14 | 95 |

(continued)

| | | Table 2 | | |
|---|---|---|---|---|
| parameter | Ypd (1/mm$^2$) | Ymr1 (%) | Aph ($\mu$m) | Hpq |
| sample 5 | 54561 | 16.18 | 7.95 | 120 |
| sample 6 | 59599 | 14.00 | 7.98 | 50 |
| sample 7 | 89945 | 38.18 | 9.56 | 111 |
| sample 8 | 74526 | 16.33 | 2.41 | 0 |
| sample 9 | 101130 | 15.76 | 8.06 | 48 |
| sample 10 | 57714 | 7.32 | 4.06 | 14 |
| sample 11 | 49319 | 17.65 | 5.65 | 110 |
| sample 12 | 69232 | 21.65 | 18.41 | 202 |
| sample 13 | 35452 | 20.30 | 9.74 | 0 |
| sample 14 | 44524 | 26.72 | 6.69 | 41 |
| sample 15 | 54933 | 9.95 | 9.30 | 45 |
| sample 16 | 54865 | 13.92 | 10.55 | 51 |
| sample 17 | 65826 | 21.40 | 12.86 | 60 |
| sample 18 | 59339 | 21.81 | 12.23 | 65 |
| sample 19 | 42491 | 24.66 | 11.34 | 0 |
| sample 20 | 37109 | 27.26 | 17.17 | 64 |
| sample 21 | 38562 | 18.77 | 8.87 | 58 |
| sample 22 | 26416 | 23.71 | 11.74 | 126 |
| sample 23 | 90693 | 23.30 | 11.10 | 14 |
| sample 24 | 91528 | 37.02 | 33.75 | 12 |

It should be mentioned that the dotted distribution range in Figs. 1C and 1D is the distribution range of the microstructure layer 123, and the thickness, the structural dimension and the structural shape of each of the elements in Figs. 1E to 1G are not entirely illustrated according to the actual ratio for conveniently illustrating the disposition condition.

<2nd example>

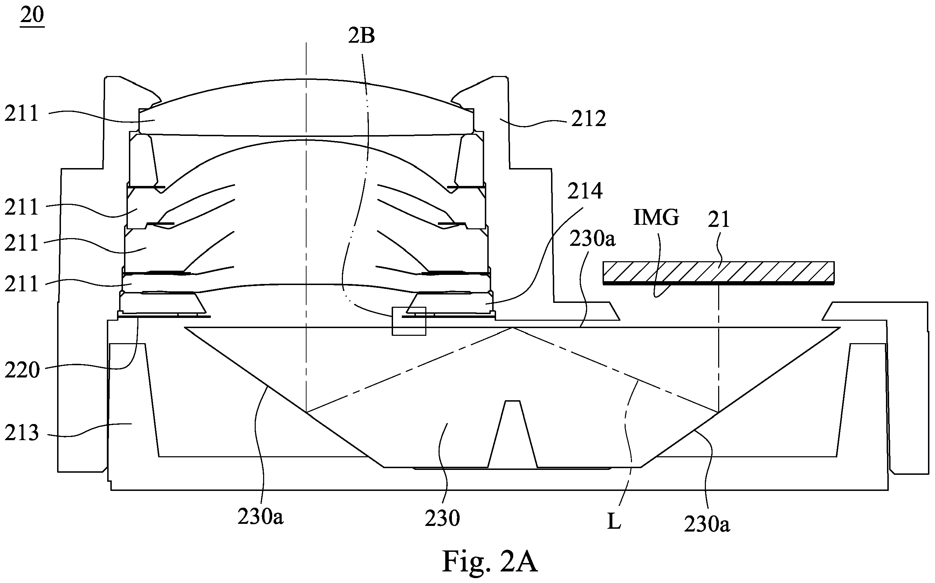

Fig. 2A is a schematic view of an imaging lens assembly module 20 according to the 2nd example of the present disclosure. In Fig. 2A, the imaging lens assembly module 20 includes an imaging lens assembly (its reference numeral is omitted) and an image sensor 21, wherein the image sensor 21 is disposed on an image surface IMG of the imaging lens assembly module 20, and the image sensor 21 is configured to receive an imaging light L of the imaging lens assembly.

The imaging lens assembly includes a plurality of lens elements 211, a sheet-like light blocking element 220 and a light path folding element 230, wherein an optical axis (its reference numeral is omitted) is defined via the lens elements 211, the sheet-like light blocking element 220 is corresponding to the light path folding element 230, and the light path folding element 230 is configured to fold the optical axis. In particular, the light path is folded via the light path folding element 230, so that the volume of the imaging lens assembly can be reduced.

The light path folding element 230 has three reflecting surfaces 230a, wherein two of the reflecting surfaces 230a are configured to reflect the light via the coating, and the other one of the reflecting surfaces 230a is configured to reflect the light by the principle of the optical total reflection.

The imaging lens assembly can further include a lens barrel 212 and an assembling element 213, wherein the lens barrel 212 is configured to accommodate the lens elements 211 and the light path folding element 230, and the assembling element 213 is configured to fix the light path folding element 230.

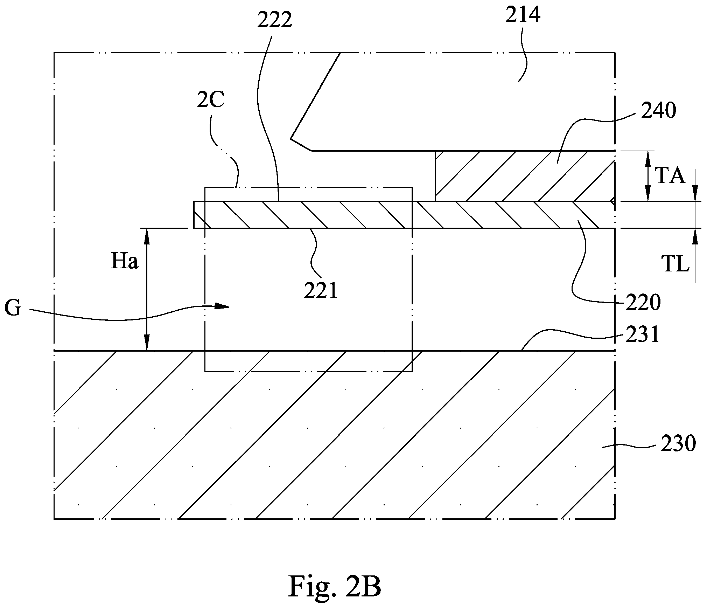

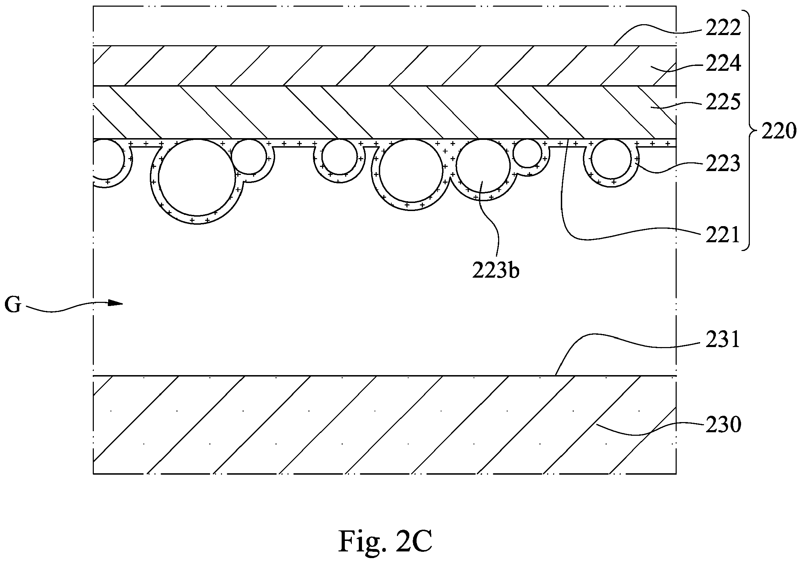

Fig. 2B is a partial enlarged view of the imaging lens assembly module 20 according to the 2nd example in Fig. 2A. Fig. 2C is a cross-sectional view of the sheet-like light blocking element 220 according to the 2nd example in Fig. 2B. In Figs. 2A to 2C, the light path folding element 230 includes an optical surface 231, wherein a total reflection of the imaging light L of the imaging lens assembly occurs at least once on the optical surface 231. The sheet-like light blocking element 220 includes a first surface 221, a second surface 222 and a microstructure layer 223, wherein the first surface 221 faces towards the optical surface 231, the second surface 222 is disposed relatively to the first surface 221, the microstructure layer 223 is disposed on the first surface 221, a plurality of protrusions are formed on the first surface 221 via the microstructure layer 223, and at least partial area between the microstructure layer 223 and the optical surface 231 has an air slit G.

In detail, the stray light easily passes through the light path folding element 230 owing to the optical surface 231, and hence the stray light can be blocked to avoid reflecting back to the light path folding element 230 by the cooperation between the air slit G and the specific surface characteristic. Further, the air slit G can be configured to avoid the microstructure layer 223 contact with the optical surface 231 so as to decrease the damage of the microstructure layer 223, and the stray light can be interacted with the microstructure layer 223 in the air slit G so as to diminish the stray light in the air slit G.

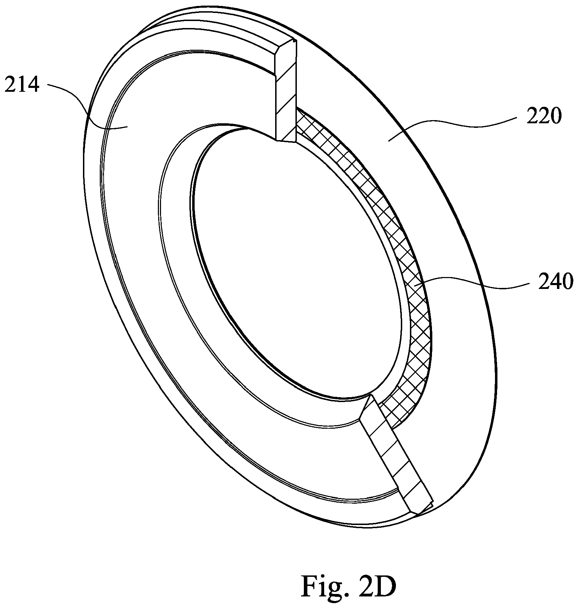

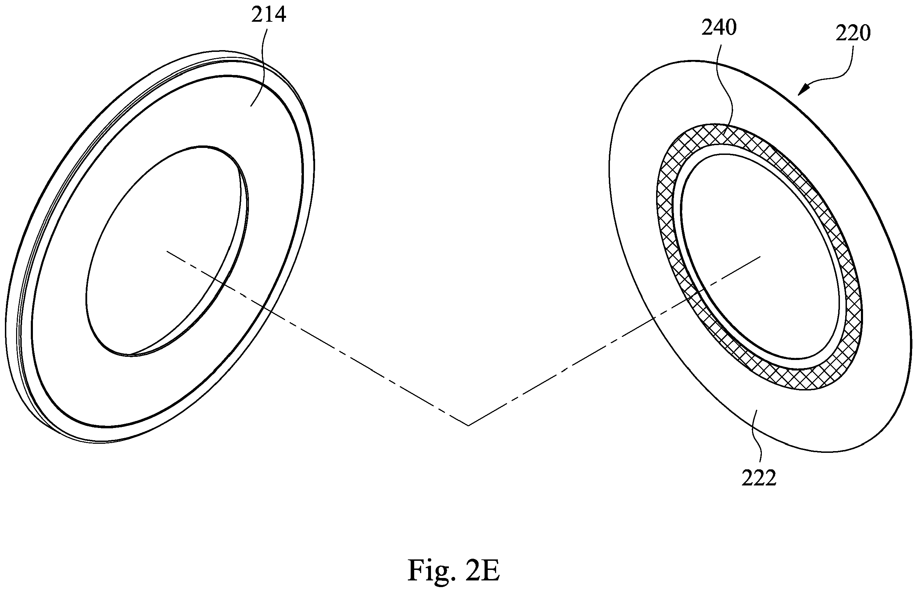

Fig. 2D is an assembling schematic view of a retainer 214 and the sheet-like light blocking element 220 according to the 2nd example in Fig. 2A. Fig. 2E is a schematic view of the retainer 214 and the sheet-like light blocking element 220 according to the 2nd example in Fig. 2A. In Figs. 2B, 2D and 2E, the imaging lens assembly can further include an adhesive element 240 disposed on the second surface 222. Therefore, the disposition location of the sheet-like light blocking element 220 is not limited to the mechanical design of the adjacent optical element (that is, the retainer 214) via the adhesive element 240, so that the design freedom of the imaging lens assembly can be enhanced. In particular, the adhesive element 240 is configured to fix the sheet-like light blocking element 220 on the retainer 214.

In Fig. 2C, the sheet-like light blocking element 220 can further include a coating layer 224 and a core material 225, wherein the core material 225 is disposed between the microstructure layer 223 and the coating layer 224, and the coating layer 224 is connected to the second surface 222.

The protrusions of the microstructure layer 223 can formed via the microparticles 223b, and the microparticles 223b are located on the first surface 221. Moreover, the protrusions can be formed on the first surface 221 by mixing the microparticles 223b in the microstructure layer 223, and the surface characteristics can be adjusted by the microparticles 223b with multiple particle sizes, wherein the protrusions can be spherical and conical, the microparticles 223b can be made of silicon oxide, titanium oxide, carbon black or acrylic resin, and the protrusions can be regularly disposed or irregularly disposed, but the present disclosure is not limited thereto.

In Fig. 2B, when a height of the air slit G is Ha, a thickness of the sheet-like light blocking element 220 is TL, and a thickness of the adhesive element 240 is TA, the following conditions of Table 3 are satisfied.

| Table 3, the 2nd example | | | |
|---|---|---|---|
| Ha ($\mu$m) | 88 | TA ($\mu$m) | 90 |
| TL ($\mu$m) | 152 | | |

Further, the parameters Ypd, Ymr1, Aph, Hpq of all of the samples 1 to 24 in Table 2 can be applied to the 2nd example.

It should be mentioned that the thickness, the structural dimension and the structural shape of each of the elements in Figs. 2B and 2C are not entirely illustrated according to the actual ratio for conveniently illustrating the disposition condition.

<3rd example>

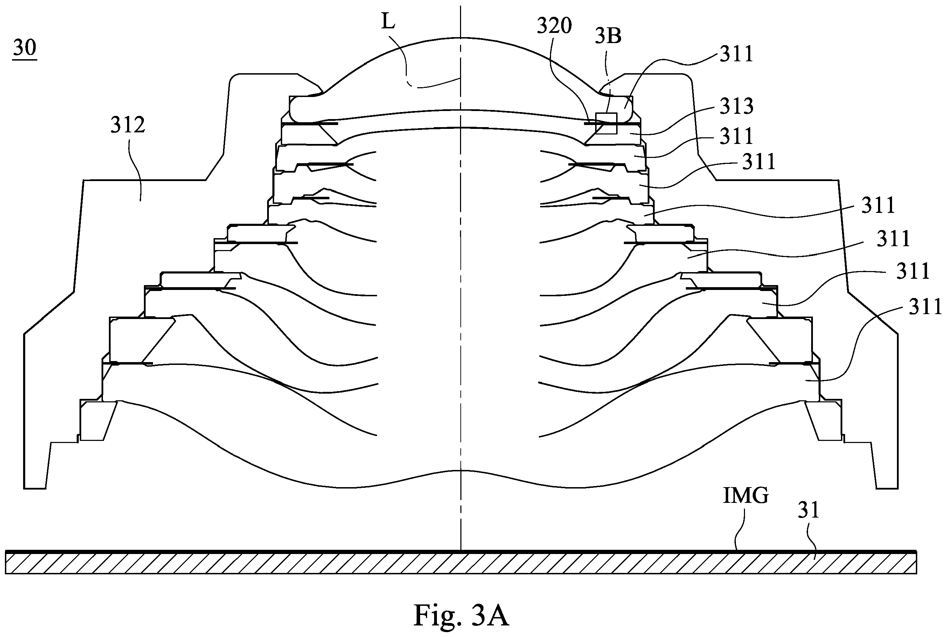

Fig. 3A is a schematic view of an imaging lens assembly module 30 according to the 3rd example of the present disclosure. In Fig. 3A, the imaging lens assembly module 30 includes an imaging lens assembly (its reference numeral is omitted) and an image sensor 31, wherein the image sensor 31 is disposed on an image surface IMG of the imaging lens assembly module 30, and the image sensor 31 is configured to receive an imaging light L of the imaging lens assembly.

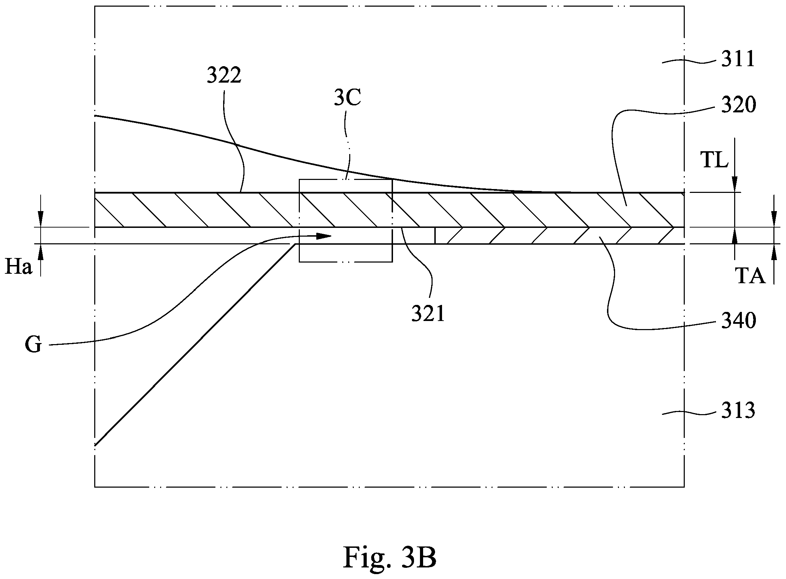

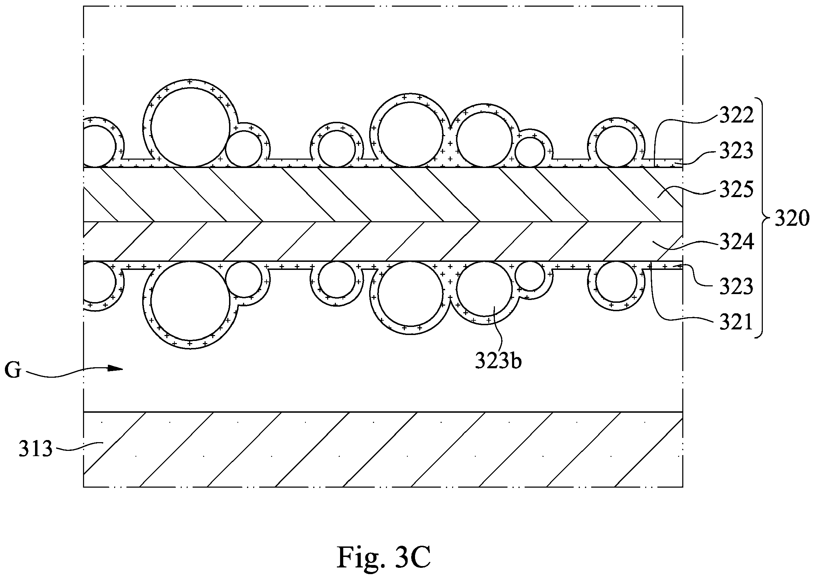

Fig. 3B is a partial enlarged view of the imaging lens assembly module 30 according to the 3rd example in Fig. 3A. Fig. 3C is a cross-sectional view of the sheet-like light blocking element 320 according to the 3rd example in Fig. 3B. In Figs. 3A to 3C, the imaging lens assembly includes a plurality of lens elements 311, an optical element 313 and a sheet-like light blocking element 320, wherein an optical axis (its reference numeral is omitted) is defined via the lens elements 311, and the sheet-like light blocking element 320 is corresponding to the optical element 313. According to the 3rd example, the optical element 313 is a spacer, and one of the lens elements 311 contacted with the sheet-like light blocking element 320 is a molded glass lens element.

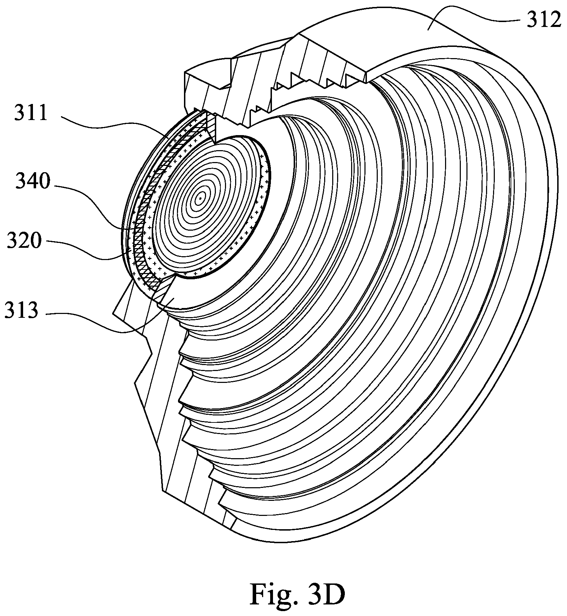

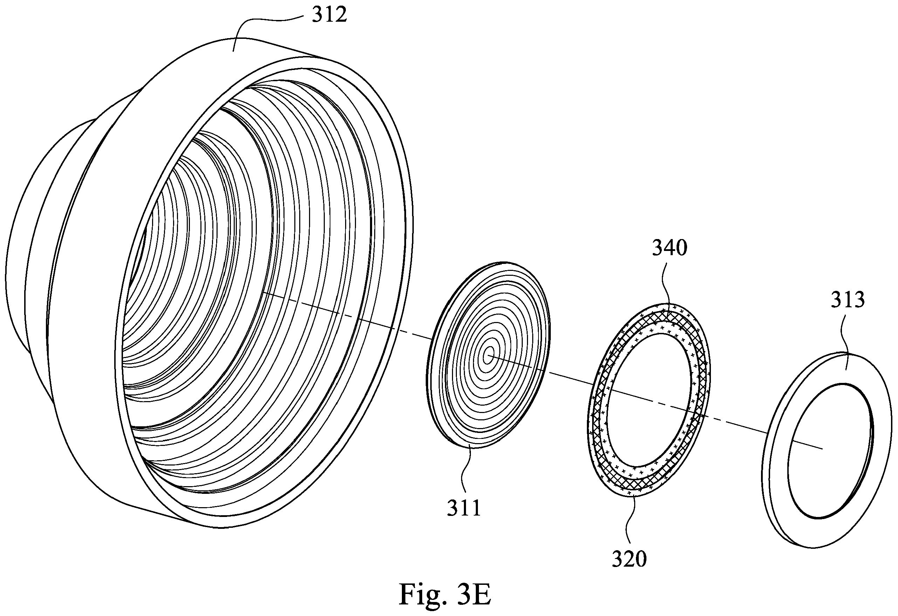

Fig. 3D is a partial cross-sectional view of the imaging lens assembly according to the 3rd example in Fig. 3A. Fig. 3E is a partial exploded view of the imaging lens assembly according to the 3rd example in Fig. 3A. In Figs. 3A, 3D and 3E, the imaging lens assembly can further include a lens barrel 312, wherein the lens barrel 312 is configured to accommodate the lens elements 311, the optical element 313 and the sheet-like light blocking element 320.

In Figs. 3B and 3C, the sheet-like light blocking element 320 includes a first surface 321, a second surface 322 and two microstructure layers 323, wherein the first surface 321 faces towards the optical element 313, the second surface 322 is disposed relatively to the first surface 321, the microstructure layers 323 are disposed on the first surface 321 and the second surface 322, a plurality of protrusions are formed on the first surface 321 and the second surface 322 via the microstructure layers 323, and at least partial area between the microstructure layers 323 and the optical element 313 has an air slit G.

In Figs. 3B, 3D and 3E, the imaging lens assembly can further include an adhesive element 340 disposed on the first surface 321, and the air slit G is formed on the at least partial area between the microstructure layer 323 and the optical element 313 via the adhesive element 340. Therefore, the disposition location of the sheet-like light blocking element 320 is not limited to the mechanical design of the adjacent optical element (that is, the optical element 313) via the adhesive element 340, so that the design freedom of the imaging lens assembly can be enhanced. In particular, the adhesive element 340 is configured to fix the sheet-like light blocking element 320 on the optical element 313.

In Fig. 3C, the sheet-like light blocking element 320 can further include a coating layer 324 and a core material 325, wherein the core material 325 is disposed between the microstructure layer 323 and the coating layer 324, and the coating layer 324 is connected to the first surface 321.

The protrusions of the microstructure layers 323 can formed via the microparticles 323b, and the microparticles 323b are located on the first surface 321 and the second surface 322. Moreover, the protrusions can be formed on the first surface 321 and the second surface 322 by mixing the microparticles 323b in the microstructure layers 323, and the surface characteristics can be adjusted by the microparticles 323b with multiple particle sizes, wherein the protrusions can be spherical and conical, the microparticles 323b can be made of silicon oxide, titanium oxide, carbon black or acrylic resin, and the protrusions can be regularly disposed or irregularly disposed, but the present disclosure is not limited thereto.

In Fig. 3B, when a height of the air slit G is Ha, a thickness of the sheet-like light blocking element 320 is TL, and a thickness of the adhesive element 340 is TA, the following conditions of Table 4 are satisfied.

| Table 4, the 3rd example | | | |
|---|---|---|---|
| Ha ($\mu$m) | 8 | TA ($\mu$m) | 10 |
| TL ($\mu$m) | 12 | | |

Further, the parameters Ypd, Ymr1, Aph, Hpq of all of the samples 1 to 24 in Table 2 can be applied to the 3rd example.

It should be mentioned that the dotted distribution range in Figs. 3D and 3E is the distribution range of the microstructure layers 323, and the thickness, the structural dimension and the structural shape of each of the elements in Figs. 3B and 3C are not entirely illustrated according to the actual ratio for conveniently illustrating the disposition condition.

<4th example>

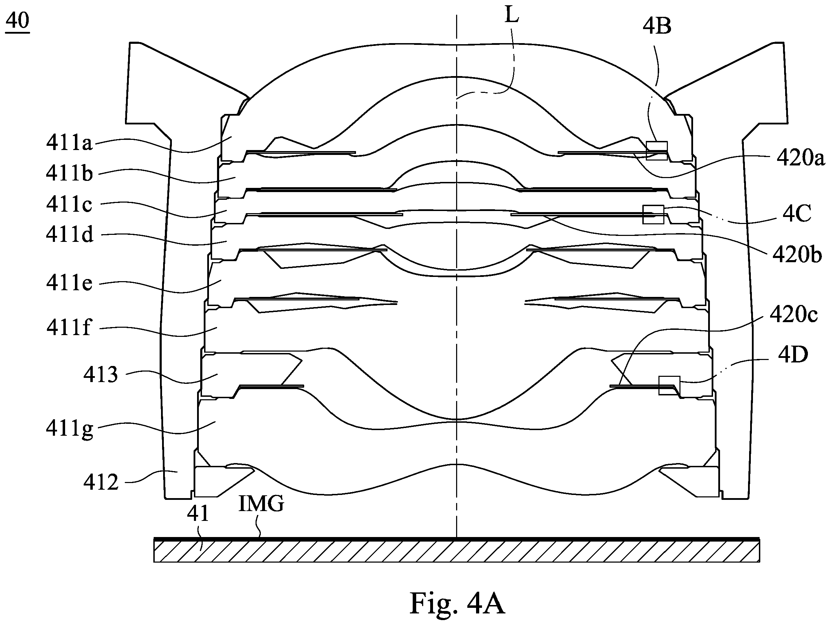

Fig. 4A is a schematic view of an imaging lens assembly module 40 according to the 4th example of the present disclosure. In Fig. 4A, the imaging lens assembly module 40 includes an imaging lens assembly (its reference numeral is omitted) and an image sensor 41, wherein the image sensor 41 is disposed on an image surface IMG of the imaging lens assembly module 40, and the image sensor 41 is configured to receive an imaging light L of the imaging lens assembly.

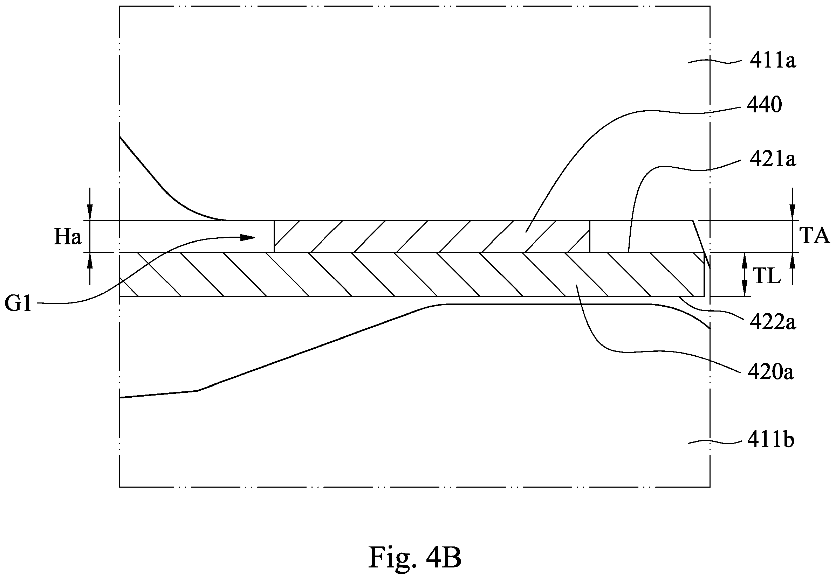

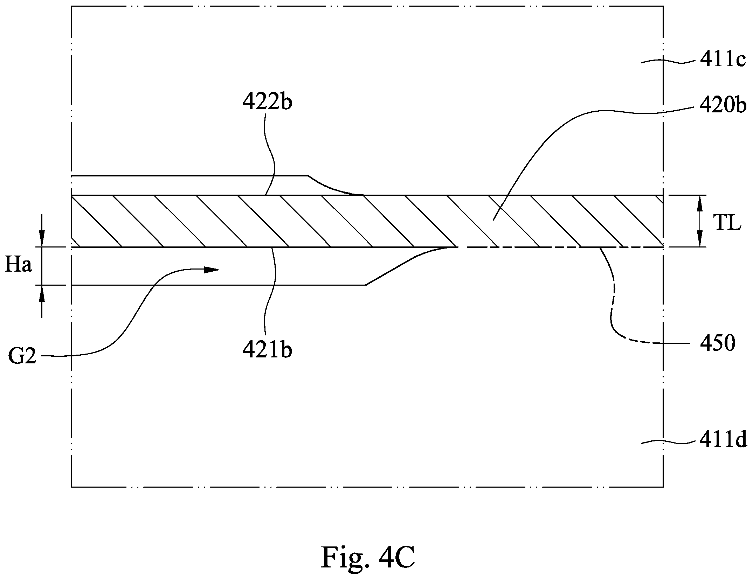

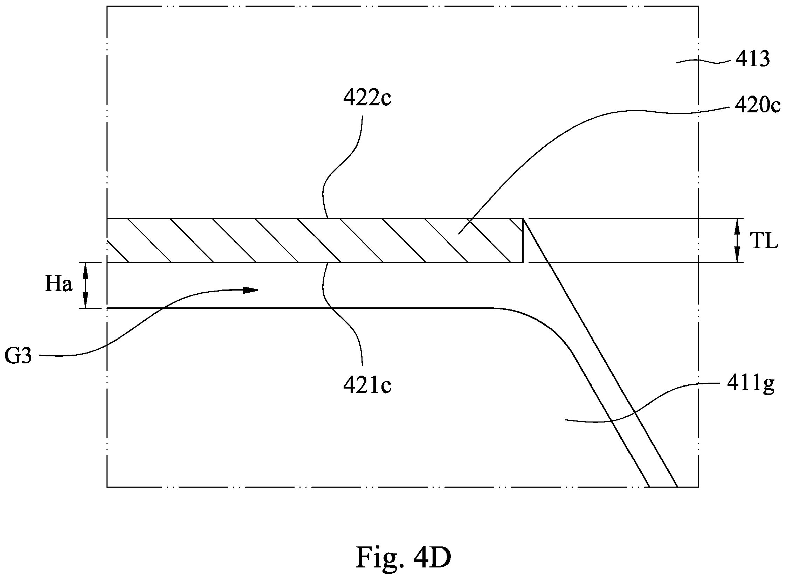

Fig. 4B is a partial enlarged view of the imaging lens assembly module 40 according to the 4th example in Fig. 4A. Fig. 4C is another partial enlarged view of the imaging lens assembly module 40 according to the 4th example in Fig. 4A. Fig. 4D is another partial enlarged view of the imaging lens assembly module 40 according to the 4th example in Fig. 4A. In Figs. 4A to 4D, the imaging lens assembly includes a plurality of optical elements 411a, 411b, 411c, 411d, 411e, 411f, 411g, 413 and a plurality of sheet-like light blocking elements 420a, 420b, 420c, wherein the sheet-like light blocking element 420a is corresponding to the optical elements 411a, 411b, the sheet-like light blocking element 420b is corresponding to the optical elements 411c, 411d, and the sheet-like light blocking element 420c is corresponding to the optical elements 411g, 413. According to the 4th example, the optical elements 411a, 411d, 411g are plastic lens elements, and the optical element 413 is a spacer.

The imaging lens assembly can further include a lens barrel 412, wherein the lens barrel 412 is configured to accommodate the optical elements 411a, 411b, 411c, 411d, 411e, 411f, 411g, 413 and the sheet-like light blocking elements 420a, 420b, 420c.

In Fig. 4B, the sheet-like light blocking element 420a includes a first surface 421a, a second surface 422a and a microstructure layer (not shown), wherein the first surface 421a faces towards the optical element 411a, the second surface 422a is disposed relatively to the first surface 421a, the microstructure layer is at least disposed on the first surface 421a, a plurality of protrusions are formed on the first surface 421a via the microstructure layer, and at least partial area between the microstructure layer and the optical element 411a has an air slit G1.

The imaging lens assembly can further include an adhesive element 440 disposed on the first surface 421a, and the air slit G1 is formed on the at least partial area between the microstructure layer and the optical element 411a via the adhesive element 440. Therefore, the disposition location of the sheet-like light blocking element 420a is not limited to the mechanical design of the adjacent optical element (that is, the optical element 411a) via the adhesive element 440, so that the design freedom of the imaging lens assembly can be enhanced. In particular, the adhesive element 440 is configured to fix the sheet-like light blocking element 420a on the optical element 411a.

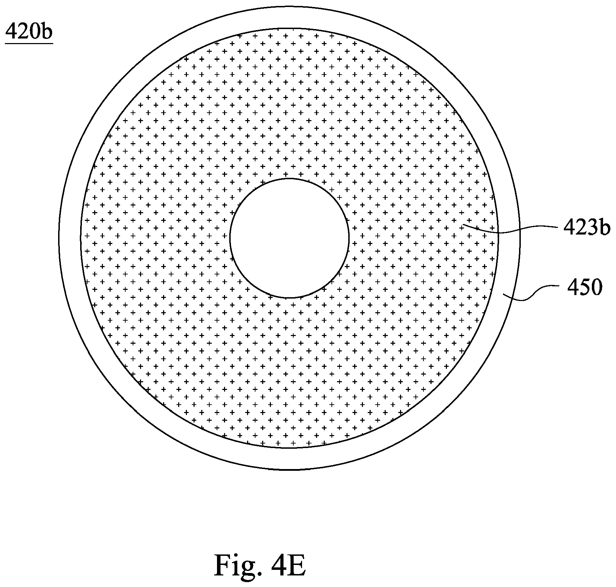

Fig. 4E is a schematic view of the sheet-like light blocking element 420b according to the 4th example in Fig. 4C. In Figs. 4C and 4E, the sheet-like light blocking element 420b includes a first surface 421b, a second surface 422b and a microstructure layer 423b, wherein the first surface 421b faces towards the optical element 411d, the second surface 422b is disposed relatively to the first surface 421b, the microstructure layer 423b is at least disposed on the first surface 421b, a plurality of protrusions are formed on the first surface 421b via the microstructure layer 423b, and at least partial area between the microstructure layer 423b and the optical element 411d has an air slit G2.

In particular, the air slit G2 can be formed via the assembling between the optical elements 411c, 411d. Therefore, the assembling space can be formed between the optical elements 411c, 411d by the engagement assembling between the optical elements 411c, 411d, so that the air slit G2 can be formed during the sheet-like light blocking element 420b is assembled thereinto.

Further, the first surface 421b can include a plane portion 450 smoother than another area of the first surface 421b, the plane portion 450 is physically contacted with the optical element 411d, and the dotted line in Fig. 4C is configured to indicate the range of the plane portion 450. Therefore, the assembling accuracy can be enhanced. Moreover, the plane portion 450 can be formed by controlling the disposition range of the microstructure layer 423b, and the smoother area can be also formed by pressing the partial area of the microstructure layer 423b tightly via the stamping process.

In Fig. 4D, the sheet-like light blocking element 420c includes a first surface 421c, a second surface 422c and a microstructure layer (not shown), wherein the first surface 421c faces towards the optical element 411g, the second surface 422c is disposed relatively to the first surface 421c, the microstructure layer is at least disposed on the first surface 421c, a plurality of protrusions are formed on the first surface 421c via the microstructure layer, and at least partial area between the microstructure layer and the optical element 411g has an air slit G3.

In particular, the assembling method in Fig. 4D is the loose fit, so that the height of the air slit G3 can be changed along with the position of the sheet-like light blocking element 420c. In other words, the slight shake of the sheet-like light blocking element 420c can be caused in the assembling space.

In Figs. 4B to 4D, when a height of each of the air slits G1, G2, G3 is Ha, a thickness of each of the sheet-like light blocking elements 420a, 420b, 420c is TL, and a thickness of the adhesive element 440 is TA, the following conditions of Table 5 are satisfied.

| Table 5, the 4th example | | | | |
|---|---|---|---|---|
| Ha (μm) (air slit G1) | 35 | TL (μm) (sheet-like light blocking element 420b) | 23 |
| TL (μm) (sheet-like light blocking element 420a) | 58 | Ha (μm) (air slit G3) | 68 |
| TA (μm) | 37 | TL (μm) (sheet-like light blocking element 420c) | 120 |
| Ha (μm) (air slit G2) | 52 | | |

Further, the parameters Ypd, Ymr1, Aph, Hpq of all of the samples 1 to 24 in Table 2 can be applied to the 4th example.

It should be mentioned that the dotted distribution range in Fig. 4E is the distribution range of the microstructure layer 423b, and the thickness, the structural dimension and the structural shape of each of the elements in Figs. 4B to 4D are not entirely illustrated according to the actual ratio for conveniently illustrating the disposition condition.

<5th example>

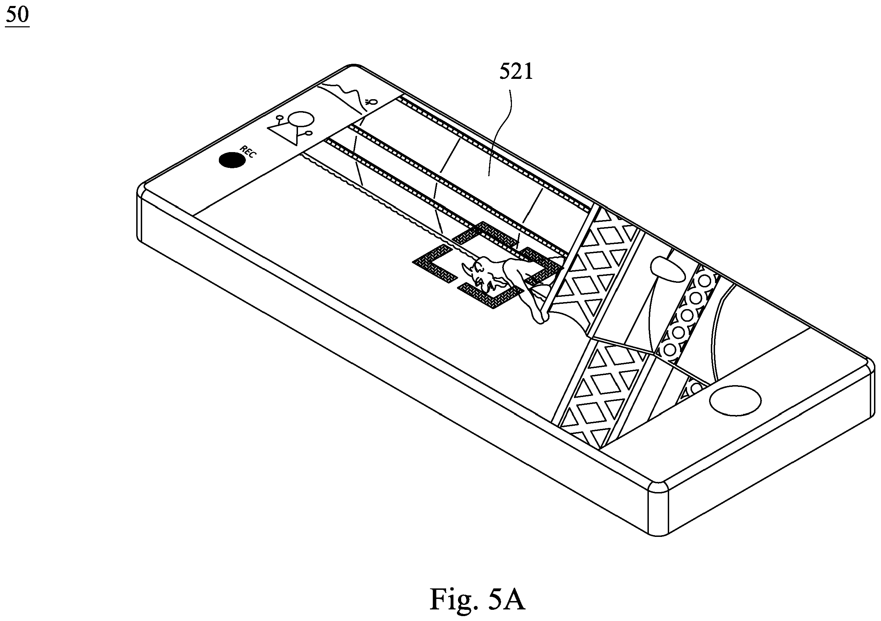

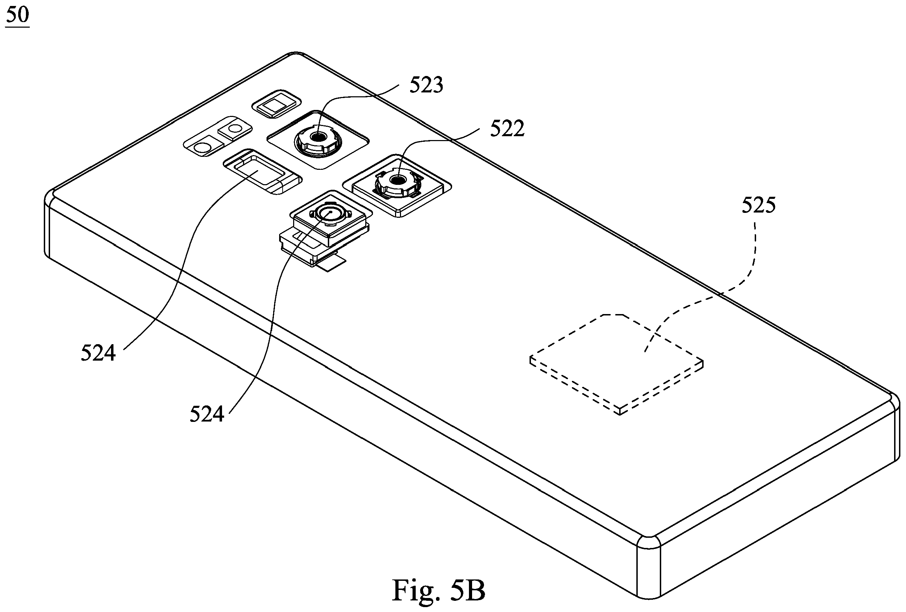

Fig. 5A is a schematic view of an electronic device 50 according to the 5th example of the present disclosure. Fig. 5B is another schematic view of the electronic device 50 according to the 5th example in Fig. 5A. In Figs. 5A and 5B, the electronic device 50 is a smart phone, the electronic device 50 can have the wireless communication function, the electronic device 50 includes an imaging lens assembly module, and the imaging lens assembly module includes imaging lens assemblies and an image sensor, wherein the image sensor is disposed on an image surface of the imaging lens assembly module, and the image sensor is configured to receive an imaging light of the imaging lens assembly. Moreover, the imaging lens assemblies can be an ultra-wide angle imaging lens assembly 522, a high resolution imaging lens assembly 523 and telephoto imaging lens assemblies 524, and the user interface 521 is a touch screen, but the present disclosure is not limited thereto. In particular, the imaging lens assemblies can be the imaging lens assembly according to the aforementioned 1st example to the 4th example, but the present disclosure is not limited thereto.

The user interface 521 has the touch function, and users can enter a shooting mode via the user interface 521, wherein the user interface 521 is configured to display the scene, and the shooting angle can be manually adjusted to switch the ultra-wide angle imaging lens assembly 522, the high resolution imaging lens assembly 523 and the telephoto imaging lens assemblies 524. At this moment, the imaging light is gathered on the image sensor via the imaging lens assembly, and an electronic signal about an image is output to an image signal processor (ISP) 525.

In Fig. 5B, to meet a specification of the electronic device 50, the electronic device 50 can further include an optical anti-shake mechanism (not shown). Furthermore, the electronic device 50 can further include at least one focusing assisting module (its reference numeral is omitted) and at least one sensing element (not shown). The focusing assisting module can be a flash module for compensating a color temperature, an infrared distance measurement component, a laser focus module and so on. The sensing element can have functions for sensing physical momentum and kinetic energy, such as an accelerator, a gyroscope, a Hall Effect Element, to sense shaking or jitters applied by hands of the users or external environments. Accordingly, the imaging lens assembly of the electronic device 50 equipped with an auto-focusing mechanism and the optical anti-shake mechanism can be enhanced to achieve the superior image quality. Furthermore, the electronic device 50 according to the present disclosure can have a capturing function with multiple modes, such as taking optimized selfies, high dynamic range (HDR) under a low light condition, 4K resolution recording and so on. Furthermore, the users can visually see a captured image of the camera through the user interface 521 and manually operate the view finding range on the user interface 521 to achieve the autofocus function of what you see is what you get.

Moreover, the imaging lens assembly, the optical anti-shake mechanism, the sensing element and the focusing assisting module can be disposed on a flexible printed circuit board (FPC) (not shown) and electrically connected to the associated components, such as the image signal processor 525, via a connector (not shown) to perform a capturing process. Since the current electronic devices, such as smart phones, have a tendency of being compact, the way of firstly disposing the imaging lens assembly and related components on the flexible printed circuit board and secondly integrating the circuit thereof into the main board of the electronic device via the connector can satisfy the requirements of the mechanical design and the circuit layout of the limited space inside the electronic device, and obtain more margins. The autofocus function of the imaging lens assembly can also be controlled more flexibly via the touch screen of the electronic device. According to the 5th example, the electronic device 50 can include a plurality of sensing elements and a plurality of focusing assisting modules. The sensing elements and the focusing assisting modules are disposed on the flexible printed circuit board and at least one other flexible printed circuit board (not shown) and electrically connected to the associated components, such as the image signal processor 525, via corresponding connectors to perform the capturing process. In other examples (not shown herein), the sensing elements and the focusing assisting modules can also be disposed on the main board of the electronic device or carrier boards of other types according to requirements of the mechanical design and the circuit layout.

Furthermore, the electronic device 50 can further include, but not be limited to, a display, a control unit, a storage unit, a random access memory (RAM), a read-only memory (ROM), or the combination thereof.

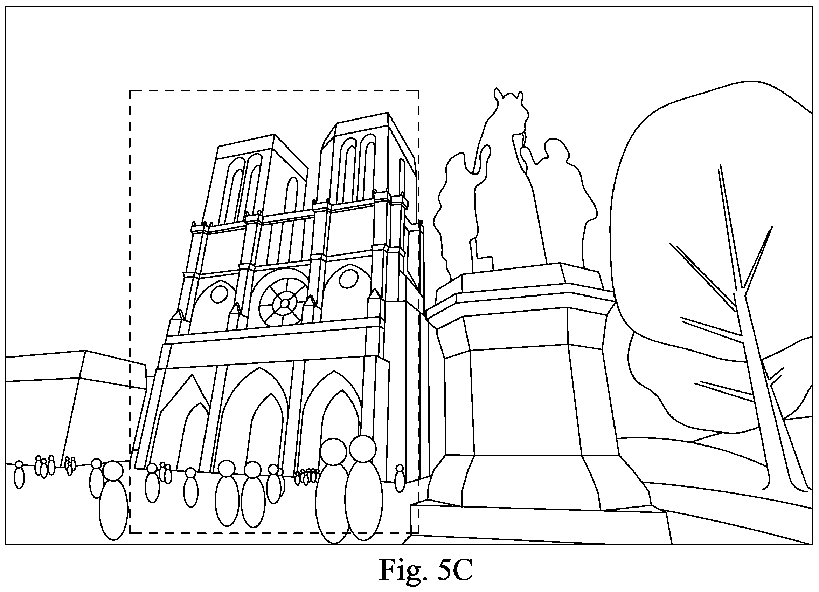

Fig. 5C is a schematic view of an image captured via the electronic device 50 according to the 5th example in Fig. 5B. In Fig. 5C, the larger range of the image can be captured via the ultra-wide angle imaging lens assembly 522, and the ultra-wide angle imaging lens assembly 522 has the function of accommodating wider range of the scene.

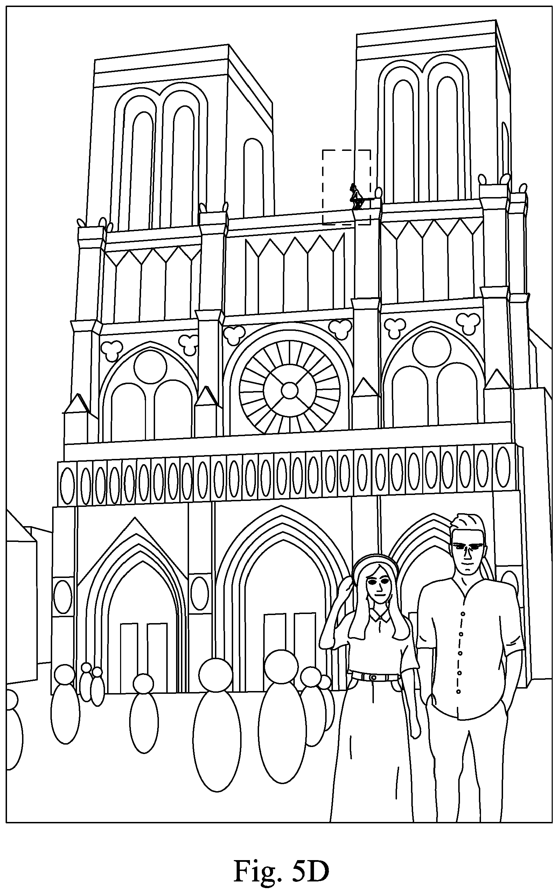

Fig. 5D is another schematic view of an image captured via the electronic device 50 according to the 5th example in Fig. 5B. In Fig. 5D, the image of the certain range with the high resolution can be captured via the high resolution imaging lens assembly 523, and the high resolution imaging lens assembly 523 has the function of the high resolution and the low deformation.

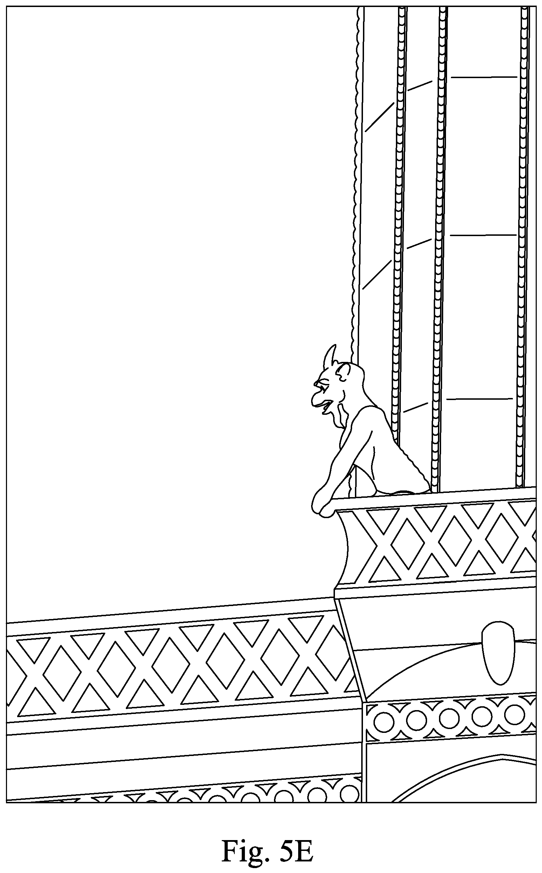

Fig. 5E is another schematic view of an image captured via the electronic device 50 according to the 5th example in Fig. 5B. In Fig. 5E, each of the telephoto imaging lens assemblies 524 has the enlarging function of the high magnification, and the distant image can be captured and enlarged with high magnification via the telephoto imaging lens assemblies 524.

In Figs. 5C to 5E, the zooming function can be obtained via the electronic device 50, when the scene is captured via the imaging lens assemblies with different focal lengths cooperated with the function of image processing.

<6th example>

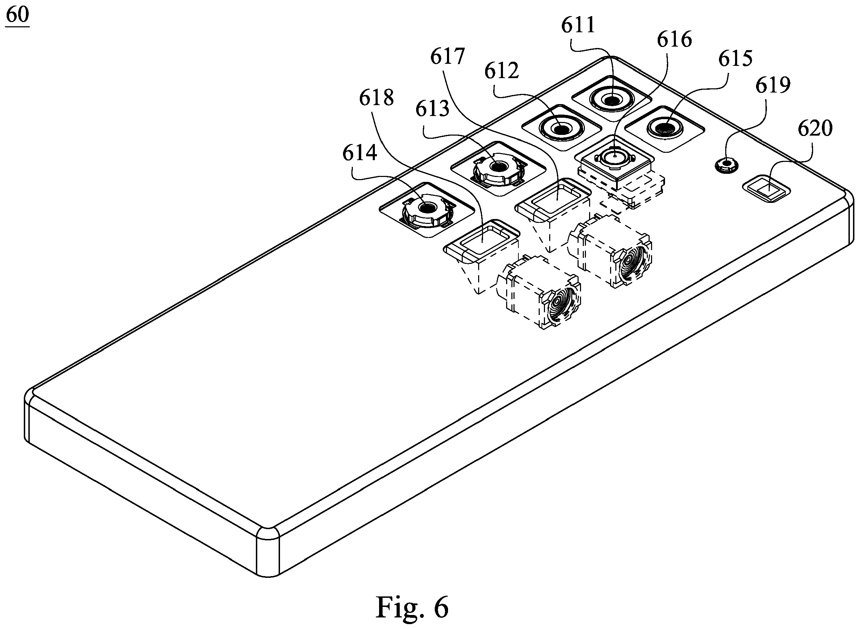

Fig. 6 is a schematic view of an electronic device 60 according to the 6th example of the present disclosure. In Fig.

6, the electronic device 60 is a smart phone, which includes an imaging lens assembly module, and the imaging lens assembly module includes imaging lens assemblies and an image sensor, wherein the image sensor is disposed on an image surface of the imaging lens assembly module, and the image sensor is configured to receive an imaging light of the imaging lens assembly. Moreover, the imaging lens assemblies can be ultra-wide angle imaging lens assemblies 611, 612, wide angle imaging lens assemblies 613, 614, telephoto imaging lens assemblies 615, 616, 617, 618 and a Time-Of-Flight (TOF) module 619. The TOF module 619 can be another type of the imaging lens assembly, and the disposition is not limited thereto. In particular, the imaging lens assemblies can be the imaging lens assembly according to the aforementioned 1st example to the 4th example, but the present disclosure is not limited thereto.

Further, the telephoto imaging lens assemblies 617, 618 are configured to fold the light, but the present disclosure is not limited thereto.

To meet a specification of the imaging lens assembly of the electronic device 60, the electronic device 60 can further include an optical anti-shake mechanism (not shown). Furthermore, the electronic device 60 can further include at least one focusing assisting module (not shown) and at least one sensing element (not shown). The focusing assisting module can be a flash module 620 for compensating a color temperature, an infrared distance measurement component, a laser focus module and so on. The sensing element can have functions for sensing physical momentum and kinetic energy, such as an accelerator, a gyroscope, a Hall Effect Element, to sense shaking or jitters applied by hands of the users or external environments. Accordingly, the imaging lens assembly of the electronic device 60 equipped with an auto-focusing mechanism and the optical anti-shake mechanism can be enhanced to achieve the superior image quality. Furthermore, the electronic device 60 according to the present disclosure can have a capturing function with multiple modes, such as taking optimized selfies, High Dynamic Range (HDR) under a low light condition, 4K Resolution recording and so on.

Further, all of other structures and dispositions according to the 6th example are the same as the structures and the dispositions according to the 5th example, and will not be described again herein.

<7th example>

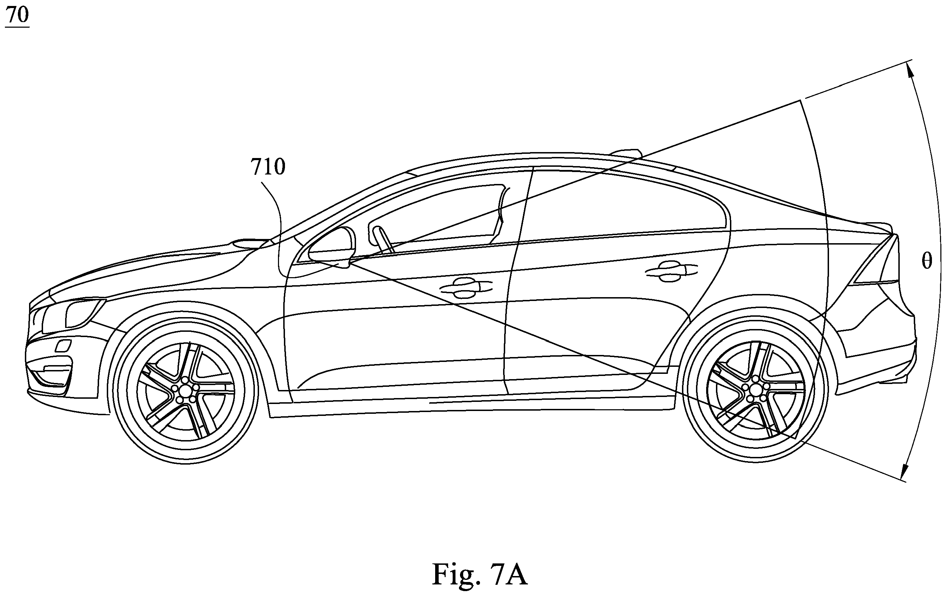

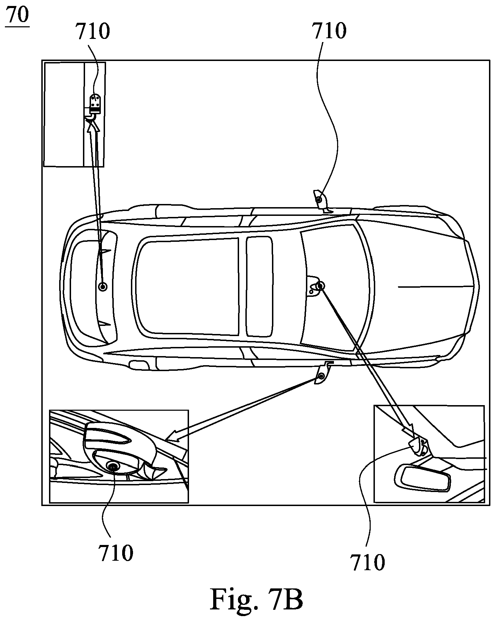

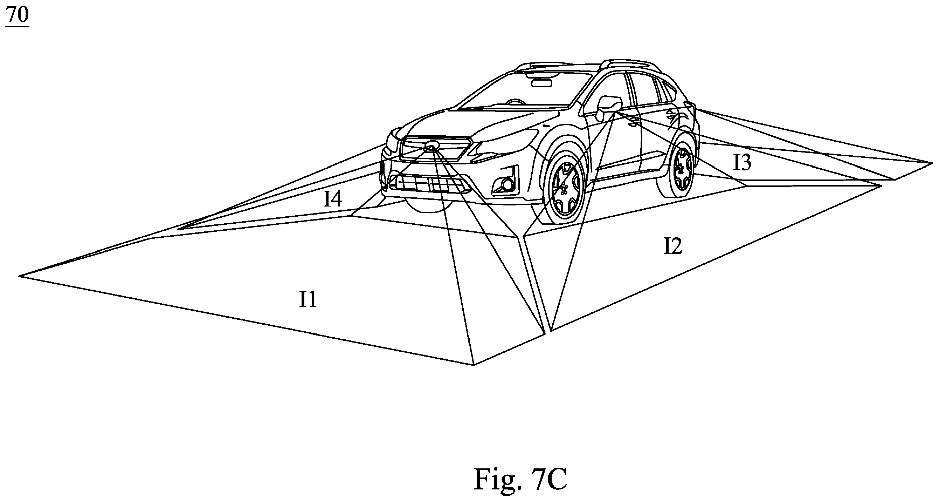

Fig. 7A is a schematic view of a vehicle instrument 70 according to the 7th example of the present disclosure. Fig. 7B is another schematic view of the vehicle instrument 70 according to the 7th example in Fig. 7A. Fig. 7C is another schematic view of the vehicle instrument 70 according to the 7th example in Fig. 7A. In Figs. 7A to 7C, an electronic device (its reference numeral is omitted) is applied to the vehicle instrument 70, and the electronic device includes an imaging lens assembly module, and the imaging lens assembly module includes imaging lens assemblies 710. According to the 7th example, a number of the imaging lens assemblies 710 is six, the imaging lens assemblies 710 are automotive imaging lens assemblies, and the imaging lens assemblies 710 can be the imaging lens assembly according to the aforementioned 1st example to the 4th example, but the present disclosure is not limited thereto.

In Figs. 7A and 7B, two of the imaging lens assemblies 710 are located under rearview mirrors on a left side and a right side, respectively, and the aforementioned imaging lens assemblies 710 are configured to capture the image information of a visual angle $\theta$. In particular, the visual angle $\theta$ can satisfy the following condition: 40 degrees < $\theta$ < 90 degrees. Therefore, the image information in the regions of two lanes on the left side and the right side can be captured.

In Fig. 7B, another two of the imaging lens assemblies 710 can be disposed in the inner space of the vehicle instrument 70. In particular, the aforementioned two imaging lens assemblies 710 are disposed on a location close to the rearview mirror inside the vehicle instrument 70 and a location close to the rear car window, respectively. Moreover, the imaging lens assemblies 710 can be further disposed on the rearview mirrors of the vehicle instrument 70 on the left side and the right side except the mirror surface, respectively, but the present disclosure is not limited thereto.

In Fig. 7C, another two of the imaging lens assemblies 710 can be disposed on a front end of the vehicle instrument 70 and a rear end of the vehicle instrument 70, respectively. By disposing the imaging lens assemblies 710 on the front end and the rear end of the vehicle instrument 70 and under the rearview mirror on the left side of the vehicle instrument 70 and the right side of the vehicle instrument 70, it is favorable for the drivers obtaining the external space information in addition to the driving seat, such as the external space informations I1, I2, I3, I4, but the present disclosure is not limited thereto. Therefore, more visual angles can be provided to reduce the blind spot, so that the driving safety can be improved. Further, the traffic information outside of the vehicle instrument 70 can be recognized by disposing the imaging lens assemblies 710 on the periphery of the vehicle instrument 70, so that the function of the automatic driving assistance can be achieved.

**Claims**

**1.** An imaging lens assembly (100), **characterized in** comprising:

a plurality of lens elements (111), an optical axis defined via the lens elements (111);

a light path folding element (130) configured to fold the optical axis, and the light path folding element (130) comprising:

an optical surface (131), a total reflection of an imaging light (L) of the imaging lens assembly (100) occurring at least once on the optical surface (131); and

a sheet-like light blocking element (120) corresponding to the light path folding element (130), and the sheet-like light blocking element (120) comprising:

a first surface (121) facing towards the optical surface (131);

a second surface (122) disposed relatively to the first surface (121); and

a microstructure layer (123) at least disposed on the first surface (121), and a plurality of protrusions formed on the first surface (121) via the microstructure layer (123);

wherein at least partial area between the microstructure layer (123) and the optical surface (131) has an air slit (G);

wherein a surface of the microstructure layer (123) is measured according to ISO25178 standard, a number of peaks per square millimeter of the microstructure layer (123) is Ypd; the surface of the microstructure layer (123) is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, an areal material ratio that divides a core surface from the reduced peak is Ymr1, and the following conditions are satisfied:

$$20000\ (1/mm^2) \leq Ypd \leq 110000\ (1/mm^2);$$

and

$$17\% \leq Ymr1 \leq 45\%.$$

2. The imaging lens assembly (100) of claim 1, wherein the surface of the microstructure layer (123) is measured according to ISO25178 standard, the areal material ratio that divides the core surface from the reduced peak is Ymr1, and the following condition is satisfied:

$$17\% \leq Ymr1 \leq 25\%.$$

3. The imaging lens assembly (100) of any of claims 1-2, wherein an average height of the reduced peak is Aph, and the following condition is satisfied:

$$2.0\ \mu m \leq Aph \leq 40.1\ \mu m.$$

4. The imaging lens assembly (100) of any of claims 1-3, wherein the average height of the reduced peak is Aph, and the following condition is satisfied:

$$2.0\ \mu m \leq Aph \leq 21.2\ \mu m.$$

5. The imaging lens assembly (100) of any of claims 1-4, wherein the average height of the reduced peak is Aph, and the following condition is satisfied:

$$5.4\ \mu m \leq Aph \leq 19.2\ \mu m.$$

6. The imaging lens assembly (100) of any of claims 1-5, wherein the average height of the reduced peak is Aph, and the following condition is satisfied:

$$7.3\ \mu m \leq Aph \leq 14.5\ \mu m.$$

7. The imaging lens assembly (100) of any of claims 1-6, wherein the surface of the microstructure layer (123) is measured according to ISO25178 standard, a number of the peaks of the microstructure layer (123) larger than the core height and larger than 4 μm is Hpq, and the following condition is satisfied:

$$2 \leq Hpq \leq 400.$$

8. The imaging lens assembly (100) of any of claims 1-7, wherein the surface of the microstructure layer (123) is measured according to ISO25178 standard, the number of the peaks of the microstructure layer (123) larger than the core height and larger than 4 μm is Hpq, and the following condition is satisfied:

$$40 \leq Hpq \leq 210.$$

9. The imaging lens assembly (100) of any of claims 1-8, wherein a height of the air slit (G) is Ha, and the following condition is satisfied:

$$1 \ \mu m < Ha < 102 \ \mu m.$$

10. The imaging lens assembly (100) of any of claims 1-9, further comprising:
an adhesive element (140) disposed on at least one of the first surface (121) and the second surface (122), and the air slit (G) is formed on the at least partial area between the microstructure layer (123) and the optical surface (131) via the adhesive element (140).

11. The imaging lens assembly (100) of any of claims 1-10, wherein a thickness of the sheet-like light blocking element (120) is TL, and the following condition is satisfied:

$$10 \ \mu m < TL < 170 \ \mu m.$$

12. The imaging lens assembly (100) of any of claims 1-11, wherein a thickness of the adhesive element (140) is TA, and the following condition is satisfied:

$$3 \ \mu m < TA < 105 \ \mu m.$$

13. The imaging lens assembly (100) of any of claims 1-12, wherein a thickness difference of entire of the adhesive element (140) is less than 10 μm.

14. The imaging lens assembly (100) of any of claims 1-13, wherein the sheet-like light blocking element (120) further comprises:
a nanostructure layer (126) disposed on the surface of the microstructure layer (123), and the nanostructure layer (126) comprises a plurality of nanoparticles (P), wherein the nanoparticles (P) are stacked, and a number of the nanoparticles (P) gradually decreases towards a direction away from the sheet-like light blocking element (120).

15. An imaging lens assembly (100), **characterized in** comprising:

a plurality of lens elements (111), an optical axis defined via the lens elements (111);
a light path folding element (130) configured to fold the optical axis, and the light path folding element (130) comprising:

an optical surface (131), a total reflection of an imaging light (L) of the imaging lens assembly (100) occurring at least once on the optical surface (131); and

a sheet-like light blocking element (120) corresponding to the light path folding element (130), and the sheet-like light blocking element (120) comprising:

a first surface (121) facing towards the optical surface (131);

a second surface (122) disposed relatively to the first surface (121); and
a microstructure layer (123) at least disposed on the first surface (121), and a plurality of protrusions formed on the first surface (121) via the microstructure layer (123);

wherein at least partial area between the microstructure layer (123) and the optical surface (131) has an air slit (G);
wherein a surface of the microstructure layer (123) is measured according to ISO25178 standard, a number of peaks per square millimeter of the microstructure layer (123) is Ypd, and the following condition is satisfied:

$$20000 \ (1/mm^2) \leq Ypd \leq 110000 \ (1/mm^2);$$

wherein the surface of the microstructure layer (123) is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, an average height of the reduced peak is Aph; the surface of the microstructure layer (123) is measured according to ISO25178 standard, a number of the peaks of the microstructure layer (123) larger than the core height and larger than 4 $\mu$m is Hpq, and at least one of the following conditions is satisfied:

$$2.0 \ \mu m \leq Aph \leq 40.1 \ \mu m;$$

$$2 \leq Hpq \leq 400.$$

16. The imaging lens assembly (100) of claim 15, wherein the average height of the reduced peak is Aph, and the following condition is satisfied:

$$2.0 \ \mu m \leq Aph \leq 21.2 \ \mu m.$$

17. The imaging lens assembly (100) of any of claims 15-16, wherein the surface of the microstructure layer (123) is measured according to ISO25178 standard, the number of the peaks of the microstructure layer (123) larger than the core height and larger than 4 $\mu$m is Hpq; the average height of the reduced peak is Aph, and at least one of the following conditions is satisfied:

$$2 \leq Hpq \leq 400;$$

$$5.4 \ \mu m \leq Aph \leq 19.2 \ \mu m.$$

18. The imaging lens assembly (100) of any of claims 15-17, wherein the average height of the reduced peak is Aph; the number of the peaks of the microstructure layer (123) larger than the core height and larger than 4 $\mu$m is Hpq, and at least one of the following conditions is satisfied:

$$5.4 \ \mu m \leq Aph \leq 19.2 \ \mu m;$$

$$40 \leq Hpq \leq 210.$$

19. The imaging lens assembly (100) of any of claims 15-18, wherein the surface of the microstructure layer (123) is measured according to ISO25178 standard, an areal material ratio that divides a core surface from the reduced peak is Ymr1, and the following condition is satisfied:

$$17\% \leq Ymr1 \leq 30\%;$$

wherein the number of the peaks of the microstructure layer (123) larger than the core height and larger than 4 $\mu$m is Hpq; the average height of the reduced peak is Aph, and at least one of the following conditions is satisfied:

$$40 \leq Hpq \leq 210;$$

$$7.3 \ \mu m \leq Aph \leq 14.5 \ \mu m.$$

20. The imaging lens assembly (100) of any of claims 15-19, wherein the areal material ratio that divides the core surface from the reduced peak is Ymr1; the average height of the reduced peak is Aph; the number of the peaks of the microstructure layer (123) larger than the core height and larger than 4 $\mu$m is Hpq, and the following conditions are simultaneously satisfied:

$$17\% \leq Ymr1 \leq 25\%;$$

$$7.3 \ \mu m \leq Aph \leq 14.5 \ \mu m;$$

and

$$40 \leq Hpq \leq 210.$$

21. The imaging lens assembly (100) of any of claims 15-20, wherein a height of the air slit (G) is Ha, and the following condition is satisfied:

$$1 \ \mu m < Ha < 102 \ \mu m.$$

22. The imaging lens assembly (100) of any of claims 15-21, further comprising:
an adhesive element (140) disposed on at least one of the first surface (121) and the second surface (122), and the air slit (G) is formed on the at least partial area between the microstructure layer (123) and the optical surface (131) via the adhesive element (140).

23. The imaging lens assembly (100) of any of claims 15-22, wherein a thickness of the sheet-like light blocking element (120) is TL, and the following condition is satisfied:

$$10 \ \mu m < TL < 170 \ \mu m.$$

24. The imaging lens assembly (100) of any of claims 15-23, wherein a thickness of the adhesive element (140) is TA, and the following condition is satisfied:

$$3 \ \mu m < TA < 105 \ \mu m.$$

25. The imaging lens assembly (100) of any of claims 15-24, wherein a thickness difference of entire of the adhesive element (140) is less than 10 $\mu$m.

26. The imaging lens assembly (100) of any of claims 15-25, wherein the sheet-like light blocking element (120) further comprises:
a nanostructure layer (126) disposed on the surface of the microstructure layer (123), and the nanostructure layer (126) comprises a plurality of nanoparticles (P), wherein the nanoparticles (P) are stacked, and a number of the nanoparticles (P) gradually decreases towards a direction away from the sheet-like light blocking element (120).

27. An imaging lens assembly, **characterized in** comprising:

an optical element (313); and
a sheet-like light blocking element (320) corresponding to the optical element (313), and the sheet-like light blocking element (320) comprising:

a first surface (321) facing towards the optical element (313);
a second surface (322) disposed relatively to the first surface (321); and
a microstructure layer (323) at least disposed on the first surface (321), and a plurality of protrusions formed on the first surface (321) via the microstructure layer (323);

wherein at least partial area between the microstructure layer (323) and the optical element (313) has an air slit (G);
wherein a surface of the microstructure layer (323) is measured according to ISO25178 standard, a number of peaks per square millimeter of the microstructure layer (323) is Ypd; the surface of the microstructure layer (323) is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, an areal material ratio that divides a core surface from the reduced peak is Ymr1, and the following conditions are satisfied:

$$20000 \ (1/mm^2) \leq Ypd \leq 110000 \ (1/mm^2);$$

and

$$17\% \leq Ymr1 \leq 45\%.$$

28. The imaging lens assembly of claim 27, wherein the surface of the microstructure layer (323) is measured according to ISO25178 standard, the areal material ratio that divides the core surface from the reduced peak is Ymr1, and the following condition is satisfied:

$$17\% \leq Ymr1 \leq 25\%.$$

29. The imaging lens assembly of any of claims 27-28, wherein an average height of the reduced peak is Aph, and the following condition is satisfied:

$$2.0 \ \mu m \leq Aph \leq 21.2 \ \mu m.$$

30. The imaging lens assembly of any of claims 27-29, wherein the average height of the reduced peak is Aph, and the following condition is satisfied:

$$5.4 \ \mu m \leq Aph \leq 19.2 \ \mu m.$$

31. The imaging lens assembly of any of claims 27-30, wherein the average height of the reduced peak is Aph, and the following condition is satisfied:

$$7.3 \ \mu m \leq Aph \leq 14.5 \ \mu m.$$

32. The imaging lens assembly of any of claims 27-31, wherein the surface of the microstructure layer (323) is measured according to ISO25178 standard, a number of the peaks of the microstructure layer (323) larger than the core height and larger than 4 $\mu$m is Hpq, and the following condition is satisfied:

$$2 \leq Hpq \leq 400.$$

33. The imaging lens assembly of any of claims 27-32, wherein the surface of the microstructure layer (323) is measured according to ISO25178 standard, the number of the peaks of the microstructure layer (323) larger than the core height and larger than 4 $\mu$m is Hpq, and the following condition is satisfied:

$$40 \le Hpq \le 210.$$

34. The imaging lens assembly of any of claims 27-33, wherein a height of the air slit (G) is Ha, and the following condition is satisfied:

$$1 \ \mu m < Ha < 102 \ \mu m.$$

35. The imaging lens assembly of any of claims 27-34, further comprising:
an adhesive element (340) disposed on at least one of the first surface (321) and the second surface (322), and the air slit (G) is formed on the at least partial area between the microstructure layer (323) and the optical element (313) via the adhesive element (340).

36. The imaging lens assembly of any of claims 27-35, wherein a thickness of the sheet-like light blocking element (320) is TL, and the following condition is satisfied:

$$10 \ \mu m < TL < 170 \ \mu m.$$

37. The imaging lens assembly of any of claims 27-36, wherein a thickness of the adhesive element (340) is TA, and the following condition is satisfied:

$$3 \ \mu m < TA < 105 \ \mu m.$$

38. The imaging lens assembly of any of claims 27-37, wherein a thickness difference of entire of the adhesive element (340) is less than 10 $\mu$m.

39. The imaging lens assembly of any of claims 27-38, wherein the first surface (421a) comprises a plane portion (450) smoother than another area of the first surface (421a), and the plane portion (450) is physically contacted with the optical element (411d).

40. The imaging lens assembly of any of claims 27-39, wherein the sheet-like light blocking element (320) further comprises:
a nanostructure layer disposed on the surface of the microstructure layer (323), and the nanostructure layer comprises a plurality of nanoparticles, wherein the nanoparticles are stacked, and a number of the nanoparticles gradually decreases towards a direction away from the sheet-like light blocking element (320).

41. An imaging lens assembly, **characterized in** comprising:

an optical element (313); and
a sheet-like light blocking element (320) corresponding to the optical element (313), and the sheet-like light blocking element (320) comprising:

a first surface (321) facing towards the optical element (313);
a second surface (322) disposed relatively to the first surface (321); and
a microstructure layer (323) at least disposed on the first surface (321), and a plurality of protrusions formed on the first surface (321) via the microstructure layer (323);

wherein at least partial area between the microstructure layer (323) and the optical element (313) has an air slit (G);
wherein a surface of the microstructure layer (323) is measured according to ISO25178 standard, a number of peaks per square millimeter of the microstructure layer (323) is Ypd, and the following condition is satisfied: 20000 (1/mm$^2$) $\le$ Ypd $\le$ 110000 (1/mm$^2$);
wherein the surface of the microstructure layer (323) is measured according to ISO25178 standard, an equivalent line and an areal material ratio curve are obtained, a core height is defined by 0% to 100% of the equivalent line corresponding to the areal material ratio curve, a reduced peak is a portion of the areal material ratio curve higher than the core height, an average height of the reduced peak is Aph; the surface of the microstructure layer (323) is measured according to ISO25178 standard, a number of the peaks of the microstructure layer (323) larger than the core height and larger than 4 $\mu$m is Hpq, and at least one of the following conditions is satisfied:

$$2.0 \text{ μm} \leq Aph \leq 40.1 \text{ μm};$$

$$2 \leq Hpq \leq 400.$$

42. The imaging lens assembly of claim 41, wherein the average height of the reduced peak is Aph, and the following condition is satisfied:

$$2.0 \text{ μm} \leq Aph \leq 21.2 \text{ μm}.$$

43. The imaging lens assembly of any of claims 41-42, wherein the surface of the microstructure layer (323) is measured according to ISO25178 standard, the number of the peaks of the microstructure layer (323) larger than the core height and larger than 4 $\mu$m is Hpq; the average height of the reduced peak is Aph, and at least one of the following conditions is satisfied:

$$2 \leq Hpq \leq 400;$$

$$5.4 \text{ μm} \leq Aph \leq 19.2 \text{ μm}.$$

44. The imaging lens assembly of any of claims 41-43, wherein the average height of the reduced peak is Aph; the number of the peaks of the microstructure layer (323) larger than the core height and larger than 4 $\mu$m is Hpq, and at least one of the following conditions is satisfied:

$$5.4 \text{ μm} \leq Aph \leq 19.2 \text{ μm};$$

$$40 \leq Hpq \leq 210.$$

45. The imaging lens assembly of any of claims 41-44, wherein the surface of the microstructure layer (323) is measured according to ISO25178 standard, an areal material ratio that divides a core surface from the reduced peak is Ymr1, and the following condition is satisfied:

$$17\% \leq Ymr1 \leq 30\%;$$

wherein the number of the peaks of the microstructure layer (323) larger than the core height and larger than 4 $\mu$m is Hpq; the average height of the reduced peak is Aph, and at least one of the following conditions is satisfied:

$$40 \leq Hpq \leq 210;$$

$$7.3 \text{ μm} \leq Aph \leq 14.5 \text{ μm}.$$

46. The imaging lens assembly of any of claims 41-45, wherein the areal material ratio that divides the core surface from the reduced peak is Ymr1; the average height of the reduced peak is Aph; the number of the peaks of the microstructure layer (323) larger than the core height and larger than 4 $\mu$m is Hpq, and the following conditions are simultaneously satisfied:

$$17\% \leq Ymr1 \leq 25\%;$$

$$7.3 \ \mu m \leq Aph \leq 14.5 \ \mu m;$$

and

$$40 \leq Hpq \leq 210.$$

47. The imaging lens assembly of any of claims 41-46, wherein a height of the air slit (G) is Ha, and the following condition is satisfied:

$$1 \ \mu m < Ha < 102 \ \mu m.$$

48. The imaging lens assembly of any of claims 41-47, further comprising:
an adhesive element (340) disposed on at least one of the first surface (321) and the second surface (322), and the air slit (G) is formed on the at least partial area between the microstructure layer (323) and the optical element (313) via the adhesive element (340).

49. The imaging lens assembly of any of claims 41-48, wherein a thickness of the sheet-like light blocking element (320) is TL, and the following condition is satisfied:

$$10 \ \mu m < TL < 170 \ \mu m.$$

50. The imaging lens assembly of any of claims 41-49, wherein a thickness of the adhesive element (340) is TA, and the following condition is satisfied:

$$3 \ \mu m < TA < 105 \ \mu m.$$

51. The imaging lens assembly of any of claims 41-50, wherein a thickness difference of entire of the adhesive element (340) is less than 10 $\mu$m.

52. The imaging lens assembly of any of claims 41-51, wherein the first surface (421b) comprises a plane portion (450) smoother than another area of the first surface (421b), and the plane portion (450) is physically contacted with the optical element (411d).

53. The imaging lens assembly of any of claims 41-52, wherein the sheet-like light blocking element (320) further comprises:
a nanostructure layer disposed on the surface of the microstructure layer (323), and the nanostructure layer comprises a plurality of nanoparticles, wherein the nanoparticles are stacked, and a number of the nanoparticles gradually decreases towards a direction away from the sheet-like light blocking element (320).

54. An imaging lens assembly module (10), **characterized in** comprising:

the imaging lens assembly (100) of any of claims 1-26; and
an image sensor (11) disposed on an image surface (IMG) of the imaging lens assembly module (10), and the image sensor (11) configured to receive the imaging light (L) of the imaging lens assembly (100).

55. An electronic device (50), **characterized in** comprising:
the imaging lens assembly module (10) of claim 54.

56. An imaging lens assembly module (30), **characterized in** comprising:

the imaging lens assembly of any of claims 27-53; and
an image sensor (31) disposed on an image surface (IMG) of the imaging lens assembly module (30), and the image sensor (31) configured to receive an imaging light (L) of the imaging lens assembly.

57. An electronic device (50), **characterized in** comprising:
the imaging lens assembly module (30) of claim 56.

Fig. 1A

100

112

111

120

130

113

Fig. 1B

Fig. 1C

Fig. 1D

Fig. 1E

EP 4 506 738 A2

EP 4 506 738 A2

Fig. 1F

123b

123a

126

P

Fig. 1G

Fig. 2A

EP 4 506 738 A2

Fig. 2B

Fig. 2C

Fig. 2D

EP 4 506 738 A2

Fig. 2E

EP 4 506 738 A2

Fig. 3A

EP 4 506 738 A2

Fig. 3B

EP 4 506 738 A2

Fig. 3C

Fig. 3D

Fig. 3E

Fig. 4A

EP 4 506 738 A2

Fig. 4B

EP 4 506 738 A2

Fig. 4C

EP 4 506 738 A2

Fig. 4D

420b

423b

450

Fig. 4E

EP 4 506 738 A2

50

521

Fig. 5A

EP 4 506 738 A2

Fig. 5B

EP 4 506 738 A2

Fig. 5C

Fig. 5D

Fig. 5E

Fig. 6

EP 4 506 738 A2

Fig. 7A

Fig. 7B

EP 4 506 738 A2

EP 4 506 738 A2

Fig. 7C